Europäisches Patentamt

European Patent Office

Office européen des brevets

(19)

(11) **EP 0 650 299 B1**

(12) # FASCICULE DE BREVET EUROPEEN

(45) Date de publication et mention
de la délivrance du brevet:
**22.07.1998 Bulletin 1998/30**

(51) Int Cl.⁶: **H04N 7/18**, G06T 5/40

(21) Numéro de dépôt: **94202979.4**

(22) Date de dépôt: **13.10.1994**

(54) **Procédé de traitement des niveaux de luminance dans une image composite et système de traitement d'image appliquant ce procédé**

Verfahren zur Verarbeitung von Luminanzpegel in einem zusammengesetzten Bild und Bildverarbeitungssystem zur Anwendung dieses Verfahrens

Method of processing luminance levels in a composite image and image processing system applying this method

(84) Etats contractants désignés:
**DE FR GB IE**

(30) Priorité: **20.10.1993 FR 9312503**

(43) Date de publication de la demande:
**26.04.1995 Bulletin 1995/17**

(73) Titulaires:
- **LABORATOIRES D'ELECTRONIQUE PHILIPS S.A.S.**
  **94450 Limeil-Brévannes (FR)**
  Etats contractants désignés:
  **FR**
- **PHILIPS ELECTRONICS N.V.**
  **5621 BA Eindhoven (NL)**
  Etats contractants désignés:
  **DE GB IE**

(72) Inventeurs:
- **Florent, Raoul**
  **F-75008 Paris (FR)**

- **Lelong, Pierre**
  **F-75008 Paris (FR)**

(74) Mandataire: **Lottin, Claudine**
  **Société Civile S.P.I.D.**
  **156, Boulevard Haussmann**
  **75008 Paris (FR)**

(56) Documents cités:
  **WO-A-90/02466          WO-A-92/14341**
  **US-A- 4 701 791          US-A- 5 023 725**

- **OPTICAL ENGINEERING, vol.31, no.2, Février 1992, BELLINGHAM US pages 280 - 286 H. NAKATANI 'Boundary value problem of image modification'**
- **PATENT ABSTRACTS OF JAPAN vol. 16, no. 31 (E-1159) 27 Janvier 1992 & JP-A-03 243 060 (FUJITSU LTD) 30 Octobre 1991**

EP 0 650 299 B1

## Description

L'invention concerne un procédé de traitement des niveaux de luminance dans une image composite comprenant une étape de formation d'une image numérique appelée cible (Iv) au moyen d'au moins deux parties d'images (Ivi,Ivj) adjacentes construites à partir d'images adjacentes de cadrage fixe, appelées sources (Ii,Ij) fournies par un système de n caméras réelles fixes, arrangées de manière à ce que leurs champs de vue individuels fusionnent pour former un seul champ de vue de grand angle pour la prise de vue d'une scène panoramique. L'invention concerne aussi un système de traitement d'images pour mettre en oeuvre ce procédé. Ce procédé et ce système trouvent leur application dans des dispositifs de surveillance et dispositifs viseurs panoramiques pour engins mobiles.

Un procédé de traitement d'image est déjà connu de la publication "Boundary value problem of image modification, 2417, Optical Engineering, 31(1992) February, No.2, Bellingham, WA, US". Ce document décrit une méthode ayant des étapes de construction d'une image composite numérique sur la base de trois images adjacentes raccordées deux à deux par un bord mis en commun. L'image composite comprend ainsi une image gauche, une image centrale et une image droite. Par suite de conditions de prise de vue différentes, les trois images ont des niveaux de gris globalement différents, de sorte qu'il apparaît des "coutures" aux frontières coïncidant avec les bords communs.

La méthode connue comprend une étape de mise en correspondance d'un groupe de 9 pixels de l'image centrale avec un groupe de 9 pixels de l'image gauche, et de mise en correspondance d'un autre groupe de 9 pixels de l'image centrale avec un groupe de 9 pixels de l'image droite ; une étape de détermination d'une fonction de correspondance gauche (M) et d'une fonction de correspondance droite (M) ; une étape de détermination d'une fonction (T) de correction d'image et une étape d'application de la fonction (T) de correction d'image.

Dans la méthode connue, l'étape de mise en correspondance est utilisée pour attribuer des nouveaux niveaux de gris à tous les points de bord de l'image centrale en fonction des niveaux de gris des points correspondants du bord de l'image adjacente. D'abord les 9 pixels respectivement des bords gauche et droit de l'image centrale prennent directement les niveaux de gris des 9 pixels des bords droit et gauche des images adjacentes. Ensuite les points situés entre les 9 points sélectionnés sur chaque bord de l'image centrale prennent un nouveau niveau de gris déterminé à partir d'une première et d'une seconde fonctions de correspondance M relatives aux bords correspondants. Les fonctions de correspondance M sont des fonctions d'interpolation linéaires par morceaux.

Puis on corrige localement, pixel par pixel, tous les pixels de l'image centrale, et de l'image centrale uniquement. A cet effet, le document fournit un déterminant T, indépendant des fonctions M, pour calculer, par interpolation linéaire dans un triangle, le niveau de gris d'un point situé à des coordonnées x,y, connaissant les niveaux de gris et les coordonnées des sommets dudit triangle. Cette étape est menée à bien en choisissant des sommets du triangle parmi les pixels sélectionnés sur les bords gauche et droit de l'image centrale. L'application du déterminant T permet de déterminer par interpolation des nouveaux niveaux de gris pour les pixels x,y à l'intérieur des triangles ainsi formés dans l'image centrale. On mène à bien la détermination des nouveaux niveaux de gris des pixels restants de l'image centrale en traçant d'autres triangles dans ladite image centrale, entre les triangles ayant déjà servi, en prenant des sommets sur les bords de l'image centrale.

Dans le document cité, l'image de gauche n'est jamais modifiée ; l'image de droite n'est jamais modifiée ; seule l'image centrale est modifiée par le déterminant T d'interpolation linéaire qui permet la propagation des contraintes de luminance provenant de la gauche au moyen du système de partage de l'espace en premiers triangles, et la propagation des contraintes de luminance provenant de la droite au moyen du système de partage de l'espace en seconds triangles intercalés avec les premiers triangles. Ainsi, l'image centrale obtient une luminance qui est interpolée localement dans ces triangles, de la gauche vers la droite et l'inverse, pour passer de la luminance globale inchangée de l'image de gauche à la luminance globale inchangée de l'image de droite. Chaque pixel de l'image centrale obtient une luminance qui dépend des coordonnées et luminances individuelles de 3 points de bords des images de droite et gauche, et qui dépend en outre de ses propres coordonnées et luminance dans l'image centrale. Le déterminant T n'est pas une fonction des lois de correspondance M. Les fonctions M donnent seulement les niveaux de gris des pixels des bords de l'image centrale.

Un système de traitement d'image est déjà connu de la demande de brevet WO-A-9214341. Ce document décrit un système de traitement d'image appliqué à la télévision. Ce système comprend une station émettrice incluant une pluralité de caméras fixes arrangées de manière adjacente pour que leurs champs de vue fusionnent et forment un champ de vue de grand angle. Ce système comprend aussi une station de traitement incluant des moyens pour générer un signal vidéo composite de la totalité de l'image correspondant au champ de vue de grand angle, et des moyens pour sélectionner une sous-image de cette image composite. Ce système comprend enfin des moyens, c'est-à-dire un moniteur, pour afficher cette sous-image. Cette sous-image correspond à un champ de vue d'angle inférieur à celui de l'image composite dit sous-section du champ de vue de grand angle.

Ce système de traitement d'image est applicable uniquement aux systèmes de télévision classiques, où l'image est formée au moyen d'un faisceau de balayage ligne après ligne.

La station de traitement permet à un utilisateur d'opérer lui-même la sélection de la sous-section du champ de vue de grand angle. La sous-image correspondante a la même dimension que l'image fournie par une caméra individuelle. L'utilisateur sélectionne cette sous-image en faisant varier le point de départ du balayage vis-à-vis de l'image composite correspondant au champ de vue de grand angle. Le champ de vue de grand angle a un axe parallèle au balayage vidéo, d'où il résulte que le point de départ du balayage vidéo de la sous-image peut être déplacé arbitrairement et continuement parallèlement à cet axe.

Eventuellement, l'angle du champ de vue auquel la sous-image correspond peut être inférieur à celui d'une caméra réelle. Mais la localisation de la sous-image n'inclut pas de déplacement perpendiculairement au balayage ; sa localisation inclut seulement des déplacements parallèlement à ce balayage. Et la formation de cette sous-image n'inclut pas d'effet de zoom vis-à-vis de l'image composite, c'est-à-dire de changement de focale de la sous-image vis-à-vis de la focale des caméras de prise de vue.

Donc la station de traitement d'image comprend des moyens pour construire ligne après ligne la sous-image vidéo sélectionnée. Ces moyens incluent essentiellement un circuit de contrôle de la synchronisation des signaux vidéo des différentes caméras.

La présente invention a pour but de résoudre le problème qui apparaît lorsque la sous-image, ou image cible construite, est numérique, et est calculée à partir d'au moins deux parties d'images sources numériques adjacentes fournies chacune par une caméra de prise de vue réelle fixe, ces deux caméras étant disposées pour que leurs champs de vue fusionnent. Dans ce cas il apparaît dans l'image cible une ligne frontière entre les deux parties d'images cibles adjacentes calculées à partir des deux images sources différentes. Ceci est dû au fait que chacune des deux caméras réelles fournit une image source qui a globalement une luminance légèrement différente de celle de l'autre, et que les parties d'image cibles qui en résultent ont aussi des luminances différentes.

Cette différence de luminance entre les deux parties d'image cibles calculées à partir des images sources provenant des deux caméras adjacentes fait que l'image cible reconstruite n'est pas parfaite.

Cette ligne frontière se trouve sur l'image cible entre les points calculés à partir des points de l'image source de la première caméra fixe, et les points calculés à partir des points de l'image source de la seconde caméra fixe.

Si l'image cible est construite à partir des points d'images de plus de deux caméras, il y aura autant de lignes frontières que de groupement de deux caméras adjacentes.

La présente invention a pour but de fournir des moyens pour égaliser la luminance globale entre deux parties d'image numérique adjacentes d'une image cible construite à partir des images sources numériques fournies par deux caméras réelles fixes dont les champs de vue fusionnent.

La différence de luminance entre les deux images sources numériques adjacentes a plusieurs origines. D'abord les réponses des caméras réelles ne sont pas les mêmes, pour un même flux lumineux reçu. Ceci est dû aux dispersions des caractéristiques de construction des caméras. Ensuite les caméras ne reçoivent pas le même flux lumineux parce qu'elles ne sont pas orientées identiquement vis-à-vis de la source d'éclairement de la scène filmée. Chaque caméra de prise de vue est munie en général d'un système adaptatif de sa réponse en fonction du flux lumineux reçu. Puisque le flux lumineux reçu est différent d'une caméra à l'autre, il en résulte que la réponse est différente.

De plus, même si chaque caméra enregistre une surface totalement uniforme du point de vue de la luminance, l'image qu'elle en forme n'est pas uniforme mais fait apparaître un phénomène de vignettage. Il s'agit d'une variation de l'intensité de l'image qui décroît, en règle générale, du centre vers les bords.

Or, il se trouve que deux pixels adjacents, situés de part et d'autre de la ligne frontière dans l'image cible reconstruite, ne proviennent pas d'une région située à la même distance du centre de chaque image source d'origine. Donc il n'y a pas le même effet de vignettage sur ces pixels adjacents.

En outre, il peut arriver que l'une des deux caméras de prise de vue recueille plus de lumière parasite que l'autre -par exemple du fait d'une réflexion parasite inopportune- ce qui augmente aussi localement le flux reçu par cette caméra et donc produit une différence locale des réponses entre les deux caméras.

De toutes ces sources de différences de luminance entre les deux images sources fournies par les deux caméras numériques réelles, résultant en une différence de luminance de part et d'autre d'une ligne frontière dans l'image numérique cible reconstruite, il apparaît que les deux premiers motifs cités sont prépondérants et que, essentiellement, la ligne frontière gênante sur l'image cible reconstruite est due au fait que chacune des deux caméras réelles adjacentes ne reçoit pas globalement la même quantité de flux lumineux que l'autre, et/ou que chacune des deux caméras réelles fournit globalement une réponse différente pour un même flux reçu.

Les autres motifs peuvent être négligés, ou bien on peut s'en prémunir. Par exemple, les réflexions parasites peuvent être évitées en munissant les caméras réelles de pare-soleil. Il apparaît également que chacun des deux motifs prépondérants de différence de luminance produit un effet global, c'est-à-dire que l'effet produit s'applique d'une manière uniforme sur l'image source de chaque caméra réelle et donc sur la partie correspondante dans l'image cible reconstruite, alors que chacun des autres motifs de différence de luminance produit un effet local (vignettage, zone de lumière parasite, etc.) qui n'apparaîtra finalement éventuellement que sur une petite partie de l'image reconstruite.

Un but de la présente invention est donc de fournir des moyens pour faire disparaître de l'image cible reconstruite, la ligne frontière qui apparaît entre les deux parties d'images adjacentes calculées à partir des éléments d'images sources fournis par deux caméras réelles dont les champs de vue fusionnent.

Selon l'invention ce but est atteint au moyen du procédé selon la revendication 1.

Ainsi, selon l'invention on transforme de manière globale d'une part les différents niveaux de luminance de l'une des deux parties de l'image cible reconstruite, et d'autre part les différents niveaux de luminance de l'autre des deux parties de l'image reconstruite, au moyen des deux lois de transformation globale des niveaux de luminance, de sorte que les niveaux de luminance de pixels correspondants dans l'image cible reconstruite sont égalisés. Par pixels correspondants, on entend des pixels qui sont situés de part et d'autre de la ligne frontière et qui cependant correspondent à des parties du champ de vue de grand angle qui auraient le même niveau de luminance si l'image en était formée par une caméra réelle unique.

A l'issue d'un tel traitement global par une première et une deuxième lois appliquées respectivement aux niveaux de luminance des pixels de la première et de la deuxième partie de l'image reconstruite, de part et d'autre de la ligne frontière, on obtient par exemple que si la première partie d'image avait globalement un niveau de luminance faible (image sombre) et si la seconde partie d'image avait globalement un niveau de luminance fort (image claire), la luminance de la première partie est globalement rehaussée, et la luminance de la seconde partie est globalement diminuée, en sorte que les pixels dits correspondants de part et d'autre de la ligne frontière ont désormais le même niveau de luminance. Il en résulte que la ligne frontière disparaît. Ces lois de corrections sont appliquées sur les pixels uniquement en fonction de leur niveau de luminance indépendamment de leur position dans chacune des deux parties d'image. Néanmoins, il est clair que les lois à appliquer doivent être différentes sur l'une et l'autre partie d'image pour égaliser les niveaux correspondants de luminance de part et d'autre de la ligne frontière.

Un problème inhérent à la reconstruction d'image pour former une image cible à partir des éléments de deux images sources fournies par des caméras réelles fixes, à focales constantes, dont les champs fusionnent, réside dans le fait que l'utilisateur peut faire varier des paramètres de la machine qui calcule l'image cible, appelée ci-après caméra virtuelle. Cette caméra virtuelle simule en fait une caméra mobile, comme on peut en trouver dans les systèmes de surveillance.

Selon l'invention, on va fournir des moyens de traitement d'image applicable à l'image d'une caméra virtuelle qui serait mobile et réglée par les 3 paramètres suivants :

1) la variation d'orientation (PAN) panoramique, dite variation d'azimut, de son axe optique, correspondant à une variation d'orientation parallèlement à un plan horizontal de cet axe optique passant par un centre optique fixe commun à la fois à toutes les caméras réelles fixes et à la caméra virtuelle mobile ; variation panoramique que l'observateur voit comme un réglage permettant d'orienter la caméra mobile vers la droite ou vers la gauche ;
2) la variation d'orientation (TILT), dite de site, de son axe optique, toujours passant par le centre optique fixe, dans un plan vertical ; variation de site que l'observateur voit comme un réglage permettant d'orienter la caméra mobile vers le haut ou vers le bas ;
3) la variation de la distance focale de la caméra virtuelle qui permet de fournir une image cible plus ou moins agrandie ; variation que l'observateur voit comme un effet de ZOOM.

Selon l'invention, ce problème est résolu par un système selon la revendication 11.

Ainsi, ce système de traitement d'image est muni de moyens pour calculer la première et la seconde lois de correction globale de la luminance, en fonction de caractéristiques de chacune des première et seconde parties d'image de part et d'autre de la ligne frontière de reconstruction de l'image cible, et pour appliquer la première loi à tous les pixels de chaque niveau de luminance de la première partie d'image, et la seconde loi à tous les pixels de chaque niveau de luminance de la seconde partie d'image.

Le dispositif connu du second document cité ne fournissait pas de moyens pour obtenir d'autres variations que celles de la variation d'azimut et ne fournissait pas non plus de moyens pour égaliser les luminances de part et d'autre de la ligne frontière dans l'image reconstruite de la caméra mobile.

Si l'on désire que la caméra virtuelle mobile soit munie des 3 paramètres de réglage cités plus haut, alors les lois de corrections de luminance pour chaque partie d'image de part et d'autre d'une ligne frontière dans l'image cible reconstruite, doivent être calculées en temps réel, chaque fois que l'utilisateur fait varier un ou plusieurs des paramètres du trio de paramètres de réglage de la caméra virtuelle.

En effet, il faut noter qu'à chaque variation d'un paramètre dans le trio, correspond une contribution différente de chacune des images des caméras réelles pour former l'image reconstruite, et donc que les lois de correction doivent être recalculées à chacune de ces variations, pour prendre en compte, par exemple, l'importance relative des différentes parties de l'image cible. Le problème ne se poserait pas dans les mêmes termes si l'image reconstruite était fixe, ou si elle était formée d'une autre manière que par un traitement numérique.

Selon l'invention, ces problèmes sont résolus au moyen d'un système selon la revendication 12.

Il en résulte que les lois de correction globales sont calculées et appliquées pour toute variation des paramètres de la caméra mobile, et en fonction des modifications de l'image cible qui apparaissent chaque fois que des nouveaux paramètres sont choisis par l'utilisateur.

Pour réduire le temps de calcul, afin d'accomplir ces calculs en temps réel, le système de traitement d'image selon l'invention est en outre muni de moyens selon les revendications 13 et 14.

L'invention est décrite ci-après en détail, en référence avec les figures schématiques annexées, parmi lesquelles :

- la FIG.1A représente une vue du dessus montrant les traces des différents plans images, dans le plan horizontal du repère terrestre, dans le cas où les caméras réelles ont des plans images perpendiculaires à ce plan horizontal ;
- la FIG.1B représente le repère terrestre Px, Py, Pz, vu en projection dans le plan horizontal ;
- la FIG.1C représente en vue plane, un plan image réel avec son système d'axes de coordonnées particulier ;
- la FIG.1D représente en vue plane, le plan image cible avec son système d'axes de coordonnées particulier ;
- la FIG.2A représente l'effet de la délimitation d'une section du champ de vue de grand angle de deux caméras réelles adjacentes, au moyen des paramètres choisis par l'utilisateur pour la caméra virtuelle, pour construire une sous-image d'une scène panoramique ;
- la FIG.2B représente l'image cible construite par la caméra virtuelle définie par ces paramètres, cette image cible étant composée d'une première partie d'image construite à partir de l'image source fournie par la première des deux caméras réelles, et d'une seconde partie d'image construite à partir de l'image source fournie par la seconde de ces caméras, lorsque ces deux parties d'images cibles sont strictement adjacentes ;
- la FIG.2C représente l'image cible construite de la même façon que dans le cas de la FIG.2B, lorsque les deux images sources fournies par les deux caméras réelles adjacentes ont une région de recouvrement ;
- la FIG.3A représente une image cible numérique (tramée) reconstruite de la même façon que dans le cas de l'une des FIG.2B ou 2C, sur laquelle est mise en évidence la différence de luminance globale entre la première partie d'image cible construite à partir de la première image source, et la seconde partie d'image cible construite à partir de la seconde image source ;
- la FIG.3B représente l'image cible numérique (tramée) de la FIG.3A après traitement par le dispositif d'égalisation globale de luminance ;

- la FIG.4A illustre la sélection des parties d'image cibles bord-à-bord ;
- la FIG.4B illustre la sélection des parties d'image cibles avec recouvrement ;
- la FIG.5 montre le graphe des points de correspondance des niveaux de luminance (r,s) pour le calcul de la loi F ;
- la FIG.6 montre le schéma du système de traitement d'image sous forme de blocs fonctionnels.

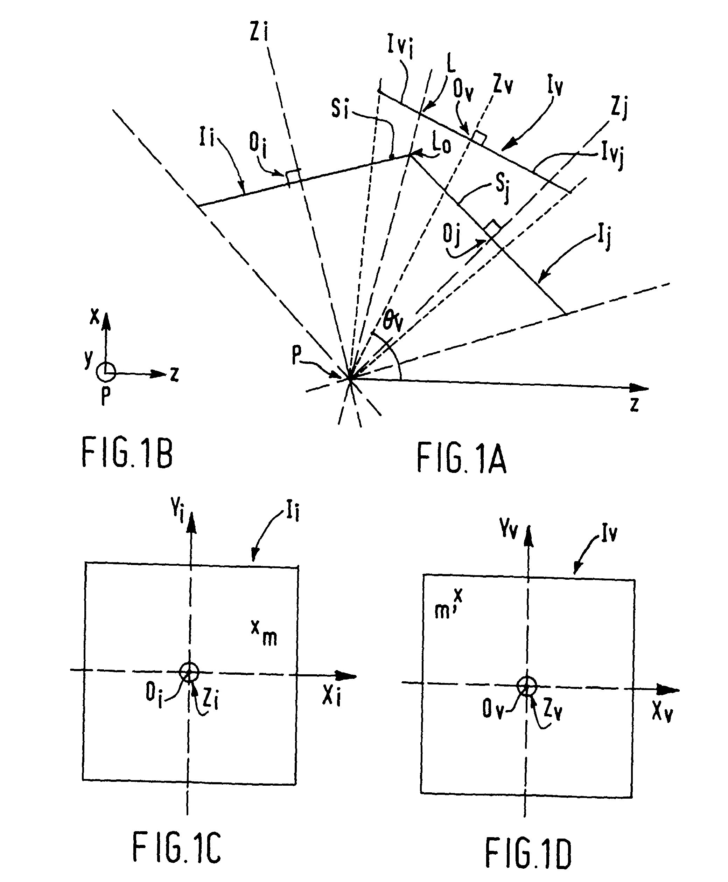

En référence avec la FIG.1A, le dispositif de prise de vue comprend une pluralité de n caméras réelles fixes, de même focale fixe et connue, disposées de manière adjacente, et de telle sorte que leurs champs de vue individuels fusionnent pour couvrir un champ de vue de grand angle. Ainsi, les n caméra fixes adjacentes fournissent n images fixes adjacentes, de sorte que ce dispositif de prise de vue peut filmer une scène panoramique. Les champs optiques de caméras sont tels que tous les détails de la scène panoramique sont enregistrés par une caméra ou par une autre, pour ne laisser échapper aucun objet de la surveillance.

Pour obtenir ce résultat, ces n caméras fixes adjacentes sont en outre disposées de telle sorte que leurs centres optiques P, encore appelés points de fuite (ou VIEW POINT en anglais) coïncident. Le centre optique d'une caméra est défini comme le point tel que tout rayon issu d'une source lumineuse et passant par ce point, traverse l'optique de la caméra sans déviation.

En fait, les centres optiques des n caméras ne peuvent pas physiquement coïncider. Mais on considère ci-après que la condition de coïncidence est suffisamment bien remplie si la distance qui sépare chacun de ces centres optiques les uns des autres est petite vis-à-vis de leur distance à la scène panoramique filmée, par exemple si leur distance respective est 5 cm ou 10 cm, et la distance à la scène panoramique est 5 m. Ainsi la condition de coïncidence est estimée remplie si le rapport de ces distances est de l'ordre de, ou supérieur à, 50, et il n'est pas besoin, selon l'invention, d'utiliser des optiques à miroirs difficiles à ajuster, et coûteuses, pour arriver à une coïncidence rigoureuse des centres optiques.

Les n caméras sont numérotées C1,... Ci, Cj,...Cn ; ces caméras fournissent respectivement les images sources numériques I1..., Ii, Ij..., In. Dans ce qui suit, on considérera seulement les images sources Ii et Ij formées par deux caméras réelles fixes adjacentes Ci et Cj.

Ces caméras Ci et Cj réelles fixes forment des images respectives de la scène panoramique dans des plans images réels adjacents Ii et Ij. Sur la FIG.1A, les axes PZi et PZj, passant respectivement par les centres géométriques Oi et Oj des images sources Ii et Ij, représentent les axes optiques des caméras réelles fixes Ci et Cj.

En référence avec la FIG.1B, on définit d'abord un repère terrestre Px, Py, Pz, d'axes orthogonaux dans lequel les axes Px et Pz sont horizontaux, et l'axe Py est vertical.

Les images sources, telles que les images Ii et Ij, sont numérisées, et chaque pixel m de ces images est repéré par ses coordonnées dans le plan image. A cet effet, comme représenté sur la FIG.1C, on définit dans chaque plan image un repère de coordonnées rectangulaires (OiXi, OiYi) et (OjXj, OjYj)) dans lequel les axes OiXi, ou OjXj, sont horizontaux, c'est-à-dire dans le plan du repère terrestre Px, Pz. Les plans images définis par (OiXi, OiYi) et (OjXj, OjYj) sont perpendiculaires aux axes optiques PZi, et PZj et ont pour centrés géométriques Oi et Oj respectivement.

Une fois établis les repères individuels liés à chaque plan image des caméras, ces plans images réels fixes peuvent être liés au repère terrestre par :

- leur angle d'azimut (en anglais PAN) $\Theta i$, $\Theta j$,
- leur angle de site (en anglais TILT) $\Phi i$, $\Phi j$.

L'angle d'azimut $\Theta i$ ou $\Theta j$, est l'angle que fait un plan vertical contenant l'axe optique PZi ou PZj, avec l'axe horizontal PZ du repère terrestre. C'est donc un angle de rotation horizontale autour de l'axe vertical Py.

L'angle de site $\Phi i$ ou $\Phi j$ est l'angle que fait l'axe optique PZi ou PZj avec le plan horizontal (Px, Pz). C'est donc un angle de rotation verticale autour d'un axe horizontal, l'axe OiXi ou OjXj de chaque plan image.

Dans l'exposé ci-après, pour des raisons de simplicité, on a supposé, en référence avec la FIG.1A que les plans images Ii, Ij réels fournis par les caméras fixes Ci, Cj étaient verticaux, c'est-à-dire que leurs angles de site $\Phi i$, $\Phi j$ étaient nuls.

Pour des raisons de simplicité également, on a noté de la même façon sur la FIG.1A la trace des plans et des axes, et les plans et axes correspondants, aussi bien pour les images sources que pour l'image cible décrite plus loin.

La FIG.1A, qui est une vue du dessus schématique des images formées, laisse donc apparaître seulement les traces Ii et Ij des plans images réels fixes représentées par des segments dans le plan horizontal Px, Pz.

Le but de l'invention est de fournir un système de reconstruction d'image numérique qui simule une caméra mobile capable, avec des réglages choisis par un utilisateur, de fournir une image numérique de n'importe quelle partie, ou sous-image, de la scène panoramique enregistrée par les n caméras fixes.

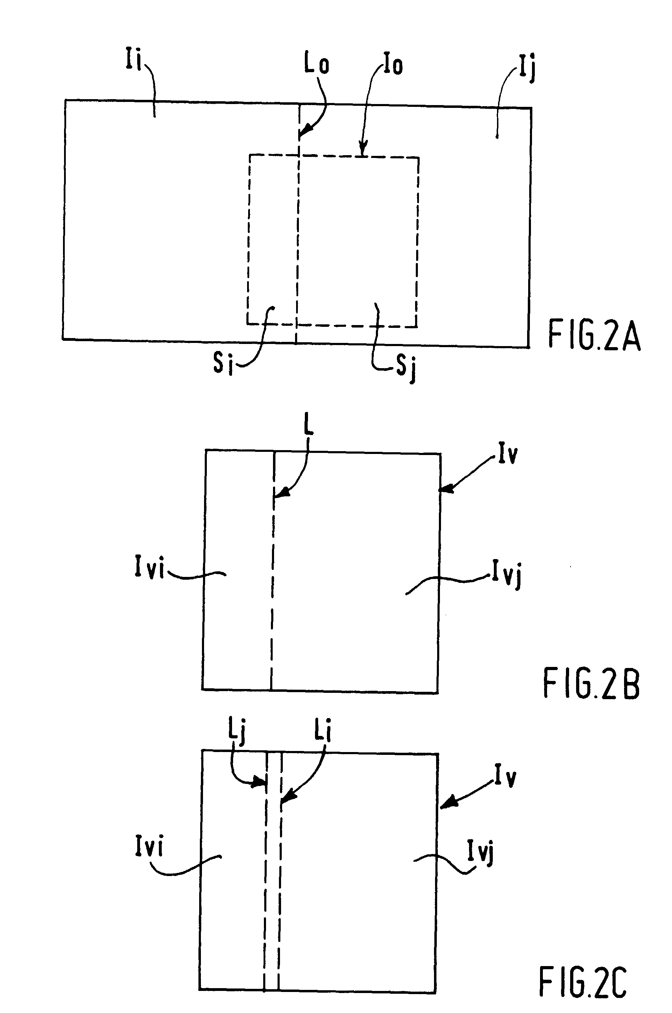

La FIG.2A montre par exemple les images Ii et Ij contiguës de la scène panoramique fournies par deux caméras fixes Ci et Cj adjacentes. Sur la FIG.2A, pour la simplicité de l'exposé, les images Ii et Ij sont représentées toutes les deux projetées dans un même plan, alors que dans la réalité, ces images font entre elles un angle égal à celui des axes optiques des caméras fixes. Dans ces images, l'utilisateur peut choisir de regarder n'importe quelle sous-image délimitée par la ligne Io, plus ou moins à gauche ou à droite, plus ou moins en haut ou en bas, avec le même grandissement que les caméras fixes, ou avec un grandissement supérieur, ou éventuellement avec un grandissement inférieur.

La caméra mobile simulée est capable de construire une image dite cible Iv à partir des parties d'image source Si, Sj délimitées par la ligne Io de la FIG.2A. Cette caméra est appelée caméra virtuelle du fait qu'elle simule une caméra non réellement existante.

Cette caméra virtuelle peut être définie de la même façon que les caméras réelles fixes par :

- son angle d'azimut $\Theta v$
- son angle de site $\Phi v$
- et son grandissement (effet de zoom) concrétisé par sa longueur focale POv, à condition de choisir son centre optique P confondu avec les centres optiques P des caméras réelles fixes, Ov étant le centre géométrique de l'image cible Iv. Le centre optique de la caméra virtuelle est confondu avec le centre optique approximatif défini plus haut pour les caméras réelles.

La FIG.1A montre la trace notée Iv du plan image de la caméra virtuelle dans le plan horizontal et son axe optique PZv passant par le centre géométrique Ov de l'image cible Iv.

Dans la définition de cette caméra virtuelle mobile, l'angle d'azimut $\Theta v$ est l'angle que fait le plan vertical contenant son axe optique PZv avec l'axe Pz horizontal du repère terrestre ; l'angle de site $\Phi v$ est l'angle que fait son axe optique PZv avec le plan horizontal Px, Pz du repère terrestre ; enfin, sa focale POv est variable, ce qui permet de changer le grandissement de cette image cible par rapport à celui des images sources (effet de ZOOM).

Ainsi, en faisant varier les angles d'azimut et de site, $\Theta k$ et $\Phi v$, et la focale POv, la caméra virtuelle est tout à fait assimilable à une caméra mobile qui balaye le champ de vue de grand angle formé par les champs de vue fusionnés des différentes caméras réelles fixes C1 à Cn.

On remarquera que la caméra virtuelle peut viser une partie petite (ou sous-section), délimitée par Io, du champ de vue de grand angle et en réaliser une image agrandie Iv par exemple de même dimension finale que chacune des images I1...In fournie par chacune des caméras réelles C1... Cn, en jouant sur sa focale variable POv.

On remarquera également que le déplacement du champ de vue de la caméra mobile peut être continu et arbitraire ; ce champ de vue correspondant à Io peut se trouver à cheval sur deux parties (Si,Sj) d'image Ii et Ij contiguës en LO, fournies par deux caméras adjacentes Ci et Cj.

Dans ce cas, l'image Iv construite par la caméra virtuelle contient deux parties d'image différentes, l'une Ivi étant construite à partir des informations contenues dans l'image numérique Ii, et l'autre Ivj étant construite à partir des informations contenues dans l'image numérique Ij. Dans la FIG.1A, Ivi et Ivj représentent les traces des images cibles Ivi et Ivj dans le plan horizontal.

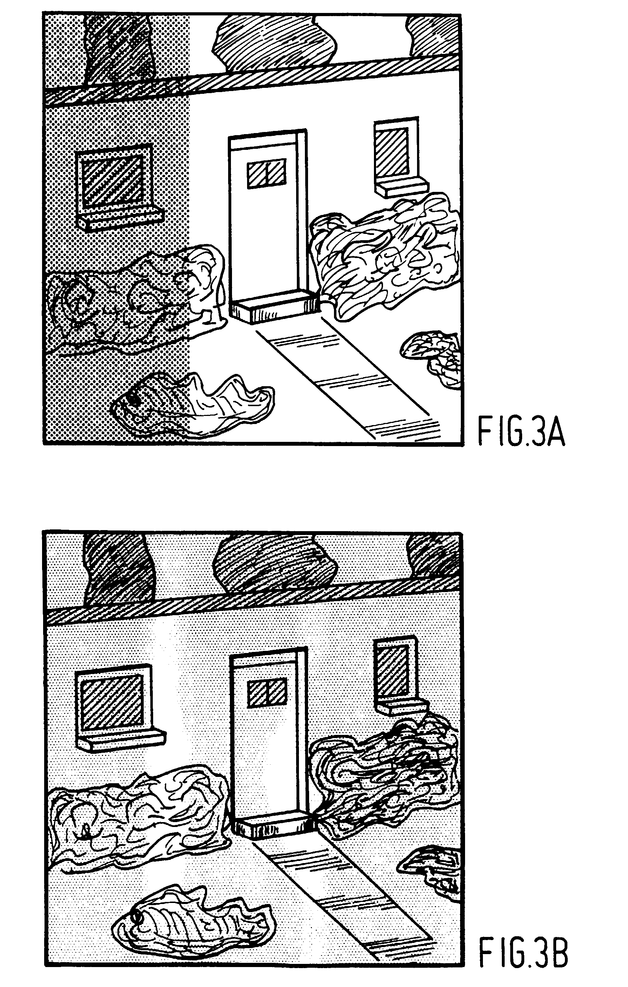

On a vu qu'il se posait alors un problème technique parce que les luminances globales des images Ii et Ij fournies par les caméras réelles sont différentes. D'où il résulte que les luminances globales des parties d'image Ivi et Ivj sont également différentes comme il apparaît dans l'image numérique de paysage représentée à titre d'exemple sur la FIG.3A.

La présente invention propose des moyens pour s'affranchir de ce défaut et fournir une image numérique reconstruite qui a une luminance globalement uniforme sur toute sa surface.

La FIG.3B montre l'image numérique du paysage de la FIG.3A dans laquelle le défaut de luminance a été corrigé par les moyens de l'invention.

On définit d'abord, comme montré sur la FIG.1D, dans le plan de l'image cible numérique Iv, un repère de coordonnées rectangulaires (Ov Xv, Ov Yv) dans lequel l'axe Ov Xv est horizontal, c'est-à-dire dans le plan horizontal du repère terrestre Px, Pz. Le pixel Ov étant le centre géométrique de l'image cible Iv, en outre situé sur l'axe optique PZv de la caméra virtuelle. On appellera ci-après Cv cette caméra virtuelle. Chaque pixel m' du plan image cible Iv est donc repéré par ses coordonnées dans ce système d'axes rectangulaires (Ov Xv, Ov Yv).

La présente invention s'est donnée d'abord pour but de fournir une première loi de correction globale notée Gi de la luminance des pixels constituant la première partie d'image cible Ivi construite à partir des éléments de la première image source Ii ; et de fournir une seconde loi de correction globale notée Gj de la luminance des pixels constituant la seconde partie d'image cible Ivj construite à partir des éléments de la seconde image source Ij.

Dans chaque image cible construite, les pixels sont caractérisés chacun par leur localisation dans l'image, définie par leurs coordonnées dans le repère (OvXv, OvYv), et par leur niveau sur une échelle de niveaux de luminance ou de niveaux de gris, graduée par exemple de 1 à 256 ; les pixels les plus lumineux ou clairs étant affectés du niveau de luminance le plus grand ; et les pixels les moins lumineux étant affectés du niveau de luminance le plus petit. L'expression niveau de luminance est équivalente à niveau de gris. On se bornera ci-après à parler de niveau de luminance.

Par correction globale, on entend que les lois s'appliquent sur tous les pixels d'un niveau de luminance donné, indépendamment de sa position dans l'image.

### I - Etape N°1 ; sélection des parties d'image cible

Pour calculer la première loi Gi et la seconde loi Gj, en temps réel, et pouvoir ensuite appliquer ces lois respectivement sur les parties d'image Ivi et Ivj également en temps réel, dans une première étape mise en oeuvre par le dispositif de calcul selon l'invention, on va sélectionner, dans l'image cible numérique Iv, deux groupes de correspondance de pixels.

Ces deux groupes de correspondance de pixels, notés respectivement Ai et Aj, peuvent être sélectionnés comme des groupes de pixels correspondants dans les images numériques Ivi et Ivj respectivement selon deux méthodes différentes, qui sont équivalentes pour atteindre au but de l'invention.

Dans l'une et l'autre méthode, la première partie d'image cible Ivi est sélectionnée pour fournir le premier sous-ensemble Ai, et la seconde partie d'image cible Ivj est sélectionnée pour fournir le second sous-ensemble Aj.

### a) Première méthode

La première méthode, appelée "BORD A BORD" (en anglais BORDER method) pour la différentier de la seconde, prend en compte l'hypothèse selon laquelle l'image cible numérique Iv est construite par la juxtaposition simple des parties d'images cibles Ivi numériques et Ivj, bord à bord, sans recouvrement. L'image cible Iv montre donc une droite frontière simple L entre les parties d'image Ivi et Ivj. Cette droite frontière est située entre deux lignes ou entre deux colonnes de pixels de l'image cible Iv numérique.

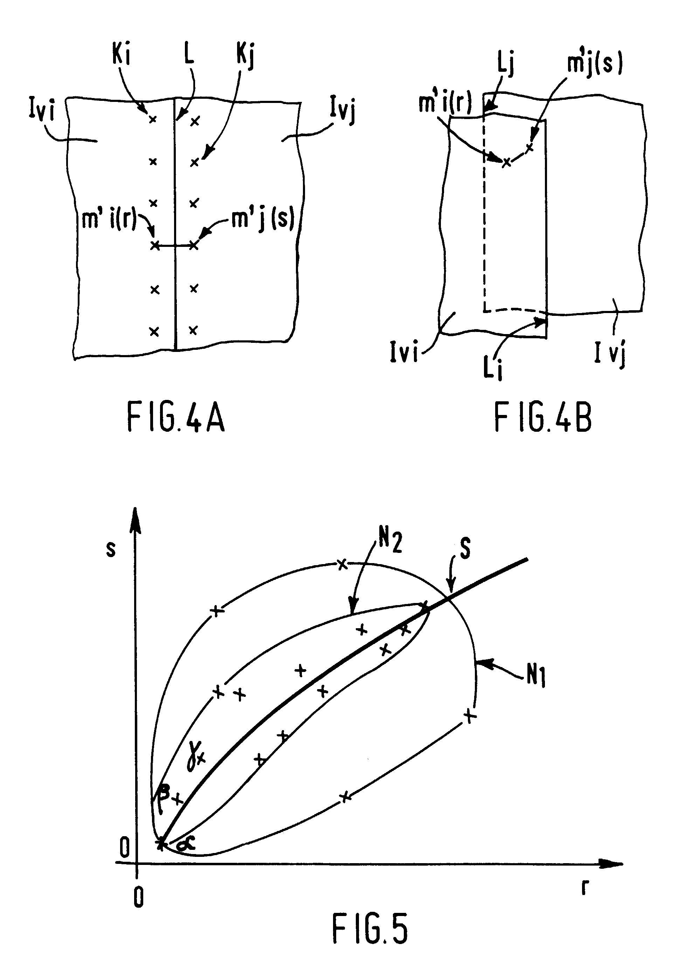

La FIG.4A illustre la mise en oeuvre de la méthode BORD A BORD lorsque la droite frontière L est verticale, donc située entre deux colonnes de pixels de l'image cible Iv.

Dans la méthode "BORD A BORD", on sélectionne comme premier groupe Ai de pixels, les pixels situés sur des colonnes Ki de pixels formant une bande adjacente à la droite frontière L dans la première partie d'image Ivi ; et on sélectionne comme deuxième groupe Aj de pixels, les pixels symétriques par rapport à la droite frontière L situés sur des colonnes Kj de pixels formant une bande adjacente à la droite frontière L dans la seconde partie d'image Ivj.

Si la droite frontière est horizontale, on sélectionne alors les pixels des deux groupes Ai et Aj sur les lignes situées de part et d'autre de cette frontière.

S'il se trouvait que la droite frontière soit quelconque on sélectionnerait, comme pixels correspondants, des pixels symétriques par rapport à la droite frontière.

A titre d'exemple, que l'homme du métier peut facilement généraliser au cas d'autre disposition de la droite frontière, l'exposé ci-après décrit l'invention dans le cas où la frontière est verticale.

Dans ce cas, les pixels dits correspondants des groupes de correspondance Ai et Aj sont les couples qui sont situés sur une même ligne horizontale de l'image cible numérique Iv, sur deux colonnes verticales adjacentes Ki, Kj, de part et d'autre de la droite frontière L. Chaque couple de points correspondants, par exemple m'i, m'j a donc, dans le repère orthogonal particulier de l'image cible Iv :

- la même ordonnée sur l'axe Yv,
- une abscisse différente de 1 pixel sur l'axe Xv,
- et un niveau de luminance différent, niveau que le dispositif selon l'invention va tendre à rendre égal.

## b) Seconde méthode

La seconde méthode, appelée "RECOUVRE" (en anglais OVERLAP method) prend en compte l'hypothèse selon laquelle l'image cible numérique est construite avec recouvrement selon une petite bande de quelques pixels de large (tout au plus 10 pixels) de la seconde partie d'image cible Ivj sur la première partie d'image cible Ivi ou VICE VERSA. La seconde partie d'image cible a pour limite Lj, et la première partie d'image cible a pour limite Li, de sorte que la bande de recouvrement a pour largeur LiLj, et est parallèle aux limites Li,Lj.

La FIG.4B illustre la mise en oeuvre de la méthode "RECOUVRE" lorsque la frontière, donc ici la bande LiLj est verticale. L'homme du métier transposera facilement cette méthode au cas où la frontière est horizontale.

Dans le cas où la frontière est verticale, on appelle maintenant Ai le groupe de correspondance formé des pixels situés dans la partie de bande de recouvrement qui appartient à la première partie d'image cible Ivi. Et on appelle maintenant Aj le groupe de correspondance formé des pixels situés dans la partie de bande de recouvrement qui appartient à la seconde partie d'image Ivj.

Dans ce cas, les pixels correspondants des groupes de correspondance Ai, Aj, sont les couples de pixels par exemple m'i, m'j qui ont à la fois les mêmes abscisses et les mêmes ordonnées dans le repère orthogonal OvXv, OvYv de l'image cible Iv ; mais qui, comme dans la méthode BORD A BORD, n'ont pas le même niveau de luminance.

Dans le cas de l'invention, où les images sont numériques, l'existence d'un recouvrement entre les deux parties d'image cible Ivi et Ivj n'implique pas que la bande LiLj ait une luminance globale différente de celle à la fois de la partie d'image Ivi et de la partie d'image Ivj. Si aucun moyen d'égalisation de luminance n'existe dans la caméra virtuelle, cette dernière possède au moins la possibilité de former l'image cible Iv par juxtaposition des parties Ivi, Ivj. Dans la méthode de RECOUVRE, on ne cherche donc pas à égaliser la luminance de trois régions : la première partie d'image cible, la bande de recouvrement, la seconde partie d'image cible ; mais seulement celle de deux parties : la première partie d'image cible Ivi et la seconde partie d'image cible Ivj, comme dans la méthode BORD A BORD.

## II - Etape N°2 : calcul de la loi de correspondance F

Dans une deuxième étape mise en oeuvre dans le dispositif selon l'invention, on va calculer une loi F qui fait correspondre l'ensemble des niveaux de luminance S de la seconde partie d'image cible Ivj avec l'ensemble des niveaux de luminance R correspondants, de la première partie d'image cible Ivi, de telle sorte que :

$$S = F(R)$$

Cette égalité écrite sur les deux ensembles S et R signifie que l'on cherche à calculer une loi F qui relie au mieux chaque niveau de luminance de R avec chaque niveau de luminance correspondant dans S.

Par niveaux de luminance correspondants, on entend des niveaux qui seraient égaux, si la première et la seconde parties d'image Ivi et Ivj étaient formées au moyen d'une caméra unique.

Dans l'une et l'autre méthode, cette loi F est calculée en prenant en compte les pixels contenus dans les groupes de correspondance Ai, Aj ; donc en prenant en compte un petit nombre de pixels : dans le cas de la méthode BORDER, le nombre des pixels impliqués dans le calcul est limité à 2 fois quelques colonnes de pixels ; et dans le cas de la méthode RECOUVRE le nombre des pixels impliqués dans le calcul est également limité à 2 fois quelques colonnes de pixels. Par quelques colonnes on entend par exemple 1 à 10. Quand on considère qu'une image numérique normale peut contenir un nombre légèrement supérieur à 500 colonnes (ou bien à 1000 colonnes) de plus de 500 (ou 1000) pixels chacune, les méthodes BORD A BORD ou RECOUVRE permettent d'économiser énormément de temps de calcul.

On appelle ci-après :

- r l'ensemble des différents niveaux de luminance présents dans le premier groupe de correspondance Ai.
- s l'ensemble des différents niveaux de luminance présents dans le second groupe de correspondance Aj.

Chaque niveau de luminance de l'ensemble r a un niveau de luminance correspondant dans l'ensemble s puisque chaque groupe Ai, Aj a le même nombre de pixels ;

On cherche à calculer la loi F qui relie au mieux les niveaux de luminance r des pixels du sous-ensemble Ai, avec les niveaux de luminance s des pixels correspondants du sous-ensemble Aj.

Ainsi, chaque niveau de luminance dans l'ensemble r est lié à un niveau de luminance dans l'ensemble s, par la loi de correspondance F, de telle sorte que l'égalité s = F(r) soit réalisée au mieux.

Une fois calculée la loi F au moyen des groupes de correspondance sélectionnée Ai, Aj, cette loi F peut être appliquée à mettre en correspondance l'ensemble R des niveaux de luminance de Ivi, et l'ensemble S des niveaux de luminance de Ivj, de sorte que S = F(R), au mieux.

Sur un graphe, on peut reporter, comme montré sur la FIG.5 :

- sur l'axe horizontal $\vec{r}$, les niveaux de luminance de tous les premiers pixels m'i des couples de pixels correspondants contenus dans le premier groupe de correspondance Ai ;
- sur l'axe vertical $\vec{s}$, les niveaux de luminance de tous les seconds pixels m'j des couples de pixels correspondants contenus dans le second groupe de correspondance Aj.

En faisant correspondre graphiquement sur ce graphe les niveaux de luminance de chaque couple, on trouve des points de coordonnées (r,s) qui doivent se trouver théoriquement sur une loi de correspondance F des niveaux de luminance de Ai et Aj.

Dans ce graphe qui prend en compte les couples (m'i, m'j) de pixels correspondants des groupes Ai, Aj, certains couples ne sont pas représentatifs de la loi de correspondance que l'on cherche à calculer :

- soit parce que l'on a choisi la méthode BORDER, qui prend en compte un nombre très restreint de couples de pixels et que dans ces couples certains sont relatifs non à une correspondance de luminance, mais à une discontinuité réelle de luminance dans la scène panoramique d'origine ;
- soit parce que le système de calcul de l'image cible, non décrit comme ne faisant pas partie de l'invention, mais néanmoins nécessaire pour fournir les pixels de l'image cible Iv (c'est-à-dire leurs coordonnées et leur niveau de luminance), n'a pas fourni une reconstruction géométrique parfaite en fonction des images sources d'origine (cas d'aberrations sphériques existant dans les images sources et mal corrigées lors de la reconstruction d'image cible par exemple) ; ainsi, dans certains couples, les deux pixels correspondants ne proviennent pas en réalité de la même zone de la scène panoramique, et donc n'ont pas de raison d'avoir la même luminance dans l'image cible définitive.

Donc sur le graphe, certains couples de pixels (m'i, m'j) ne donnent pas lieu, lorsque l'on cherche le point de correspondance de coordonnées (r,s) de leurs niveaux de luminance, à un point qui soit situé sur la loi F. Un tel point est dit aberrant.

Ainsi, à cause des défauts cités plus haut, il apparaît que les points de correspondance, de coordonnées (r,s) au lieu de se trouver tous disposés strictement le long de la courbe représentant la loi F, forment en fait un nuage de points plus ou moins éloignés de cette courbe.

Selon l'invention, on définit la loi F comme celle qui minimise l'énergie de la différence entre les niveaux de luminance de l'ensemble r et les niveaux de luminance de l'ensemble s.

Il existe dans les connaissances de l'homme du métier de nombreuses méthodes mathématiques capables de résoudre ce problème et d'opérer la mise en correspondance des niveaux de luminance r et s.

Cependant la présente invention s'est donnée pour but de fournir des moyens :

- pour résoudre ce problème en présence des couples de pixels aberrants,
- pour résoudre ce problème en temps réel,
- ces moyens devant être mis en oeuvre dans un dispositif.

A titre d'exemple, on suppose que dans le premier groupe de correspondance Ai, on trouve l'ensemble r comprenant les niveaux de luminance :
r (1, 2, 3, 4...) et dans le second groupe de correspondance Aj, on trouve l'ensemble s comprenant les niveaux de luminance respectifs :
s (1, 3, 5,...) Cela signifie que :

- le niveau de luminance 1 de l'ensemble r correspond au niveau de luminance 1 de l'ensemble s, ce qui, sur le graphe donne lieu au point de correspondance α (1,1),
- le niveau de luminance 2 de r correspond au niveau de luminance 3 de s, ce qui, sur le graphe donne lieu au point de correspondance β (2,3),
- le niveau de luminance 3 de r correspond au niveau de luminance 5 de s, ce qui sur le graphe donne lieu au point de correspondance γ (3,5), etc.

La loi F est celle qui passe au mieux par les points de correspondance α, β, γ... Dans la réalité, l'établissement de ce graphe ne donne pas lieu à une courbe de correspondance F qui joint simplement les points de correspondance, parce que ces points de correspondance forment un nuage N de points. Dans ce cas, il faut rechercher la loi F qui passe au mieux par un nombre maximal de points de correspondance.

On va maintenant décrire une méthode de calcul de la fonction F qui relie les niveaux de luminance de l'ensemble r de Ai, à ceux de l'ensemble s de Aj.

Une des difficultés qui apparaît dans la détermination de cette loi est que l'ensemble r de Ai, et donc l'ensemble correspondant s de Aj ne comprennent pas obligatoirement tous les échantillons de niveaux de luminance qui existent dans les parties d'image cibles Ii et Ij. Cependant d'une manière générale, l'expérience montre que l'on trouve dans Ai et Aj, tels que définis précédemment, un échantillonnage suffisant des niveaux de luminance, à condition de sélectionner pour F une loi qui soit :

- uniforme,
- monotone
- et qui puisse être concave ou convexe.

En effet, du fait que le nombre des niveaux de luminance dans (r,s) est plus petit que dans (R,S), certaines lois peuvent fournir une correspondance correcte des niveaux de luminance dans (r,s) de Ai, Aj, et fournir un résultat catastrophique, quand appliquées dans (R, S) pour construire lv à partir de lvi, lvj.

Il est apparu à l'expérience que des lois de la forme :

$$F(r) = ar + b$$

ou

$$F(r) = ar^2 + br + c$$

ne peuvent résoudre le problème de la mise en correspondance des niveaux de luminance de Ai avec les niveaux de luminance de Aj dans tous les cas possibles envisageables.

C'est pourquoi selon l'invention, on propose la mise en oeuvre de la loi :

$F(r) = a + br^c$ dite "loi gamma" ainsi que des moyens pour déterminer les coefficients a, b, c qui permettent d'utiliser cette loi dans le calcul de F, en temps réel, et de telle manière que ces moyens peuvent être mis en oeuvre dans un dispositif. Cette loi a donné de meilleurs résultats quand appliquée sur un grand nombre de situations, comparée aux autres lois essayées.

Pour se prémunir des erreurs de détermination des coefficients a, b, c, dues à l'existence dans Ai, Aj de couples de pixels dits aberrants, comme on a dit précédemment, l'invention fournit des moyens de calcul récursif permettant de partir d'une détermination grossière de ces coefficients pour arriver à une détermination fine, en fixant, à chaque pas de l'itération, sur le graphe, une distance vis-à-vis des points situés sur la courbe représentative de la loi F calculée dans ce pas d'itération, en éliminant les points (r,s) du graphe qui sont à une distance supérieure à la distance choisie, puis en choisissant lors du pas d'itération suivant une distance plus petite qui permet d'éliminer les points (r,s) situés à une distance supérieure à cette nouvelle distance choisie, etc.

Dans une méthode plus générale, chaque point de coordonnées (r,s) peut être affecté d'un poids qui est d'autant plus grand que ce point est proche (à une faible distance géométrique) de la courbe représentative de la loi F déterminée au pas d'itération précédent. Et à chaque pas d'itération les poids sont modifiés pour favoriser les points (r,s) d'autant plus qu'ils sont proches de la courbe. Et la courbe F est alors recalculée.

Cependant, la forme de la loi "gamma", qui montre un coefficient "c" en exposant, pourrait rendre les calculs lents. En effet, pour déterminer la meilleure loi "gamma", la méthode par itération suppose l'essai de plusieurs valeurs de chaque coefficient c pour chaque pas d'itération, puis le calcul des coefficients a et b.

Pour éviter cet inconvénient et rendre les calculs rapides, selon l'invention, la méthode de détermination de la loi F est faite par une double itération, dans laquelle chaque pas comprend deux phases.

Dans une première phase dite de détermination des paramètres a,b,c, on réalise d'abord une première étape où une première valeur du paramètre c de l'exposant est fixée et où les paramètres a et b sont calculés pour un premier nuage N1 où on prend en compte tous les points de coordonnées (r,s), puis on réalise des étapes ultérieures où des seconde puis troisième valeurs du paramètre c de l'exposant sont fixées et les paramètres a et b calculés pour le même premier nuage de points (r,s). A la suite de ces étapes, les valeurs d'un groupe de paramètre a,b,c sont sélectionnées comme fournissant la meilleure fonction $F(r) = a + br^c$ passant au mieux par le premier nuage de points (r,s).

Puis une seconde phase dite d'éclaircissement est entreprise. Dans cette phase, les points du premier nuage N1 les plus éloignés de la fonction F(r) déterminée dans la première phase sont éliminés pour garder un second nuage N2 de points dit éclairci.

Au pas suivant de la méthode par double itération, la première phase est menée à bien en fixant les valeurs d'essai du paramètre c autour de la valeur déterminée au pas précédent, en sélectionnant les paramètres a,b, c pour que la fonction $F(r) a + br^c$ passe au mieux par le second nuage N2 de points (r,s) éclairci.

On poursuit cette double itération jusqu'à ce que la fonction $F(r) = a + br^c$ passe au mieux par les points (r, s) restants dont la distance à la courbe représentative de cette fonction F(r) est inférieure à une distance déterminée comme admissible.

La loi F trouvée par le calcul de s = F(r) est ensuite appliquée aux niveaux de luminance correspondants trouvés dans les ensembles R et S relatifs aux deux parties d'images cibles lvi, lvj, selon la relation :

$$S = F(R)$$

### III - Etape N°3 : calcul des lois de correction de luminance Gi, Gj.

Dans une troisième étape, selon l'invention, on fournit ensuite des moyens pour calculer deux lois, Gi, Gj capables d'agir respectivement sur les niveaux de l'ensemble R et les niveaux de l'ensemble (S) pour ajuster individuellement ces niveaux afin d'obtenir l'égalisation des luminances des niveaux correspondants.

Il en résulte que l'égalisation globale des luminances dans la première et la seconde parties d'image cibles lvi, lvj est atteinte lorsque l'égalité écrite sur les niveaux de luminance correspondants des ensembles R et S est réalisée au mieux :

$$Gi(R) = Gj(S)$$

Comme dans la seconde étape mise en oeuvre par le dispositif selon l'invention, les ensembles R et S de niveaux de luminance ont été mis en correspondance par le calcul de la loi F, qui s'appliquait de telle sortie que $S = F(R)$, il en résulte que les lois Gi et Gj procurent l'égalisation globale des niveaux de luminance correspondants selon la relation :

$Gi(R) = Gj [F(R)]$, cette égalité étant réalisée au mieux, et, que dans ce cas, la droite frontière disparaît de l'image cible reconstruite.

En reprenant l'exemple décrit pour illustrer l'étape N°2, si on trouve dans l'ensemble R, les niveaux de luminance 1, 2, 3... et dans l'ensemble S, les niveaux de luminance correspondants 1, 3, 5,... la loi Gi qui sera trouvée agira sur les différents niveaux de luminance 1, 2, 3,... de R pour amener ces niveaux à une valeur comprise entre leur valeur actuelle et la valeur du niveau correspondant dans S. De même, la loi Gj qui sera trouvée agira sur les niveaux de luminance 1, 3, 5,... de S pour amener ces niveaux à une valeur comprise entre leur valeur actuelle et la valeur du niveau correspondant dans R. De telle sorte que :

$$Gi(1) = Gj(1)$$
$$Gi(2) = Gj(3)$$
$$Gi(3) = Gj(5) \text{ etc.}$$

et d'une manière générale :

$Gi(R) = Gj(S)$ au mieux.

L'homme du métier ne s'arrêtera pas, dans la plus grande partie des cas, à choisir l'identité pour Gi ou Gj, et à faire en sorte qu'un des ensembles de niveaux de gris reste identique à lui-même dans l'application des lois d'égalisation de luminance, et que l'autre ensemble de niveau de gris soit abaissé ou rehaussé pour obtenir l'égalité ; par exemple en appliquant simplement la loi F ou $F^{-1}$ aux niveaux de luminance de l'un des ensembles.

En effet, si l'homme du métier procédait de cette façon, l'image cible obtenue montrerait certes une luminance globale égalisée, mais cette image cible finale comprendrait une partie d'image correcte, et l'autre partie d'image franchement dégradée. En effet, il faut prendre en compte que chacune des caméras réelles possèdent des unités de réglage intrinsèques prévues pour fournir des images optimales: si les deux parties d'images cibles montrent des différences de luminance, cela vient du fait que chacune des caméras réelles a optimisé l'image source dont provient une des parties de l'image cible, et que cette optimisation est différente d'une caméra à l'autre.

On ne peut donc pas agir sur les niveaux de luminance des parties d'image cibles sans les dégrader un peu.

Selon l'invention on propose une solution pour obtenir l'égalisation globale des luminances avec le minimum de dégradation des parties d'image.

A cet effet on propose les deux lois d'égalisation suivantes :

$$Gi(R) = kF(R) + (1-k)R$$

$$Gj(S) = kS + (1-k)F^{-1} (S)$$

Relations dans lesquelles k est une constante $0 \le k \le 1$ dite constante de mélange, et R et S sont les différents niveaux de luminance qui existent dans les première et seconde parties d'image cible Ivi.

Cette constante k agit de la façon suivante : Si k = 1, il en résulte que les niveaux de luminance de l'ensemble R sont rendus égaux aux niveaux de luminance de l'ensemble S, Si k = 0 c'est l'opération contraire.

On choisit de préférence k égal au pourcentage de surface de la seconde partie d'image cible Ivj dans l'image cible totale Iv.

Ainsi on constate que si dans l'image totale Iv, la surface d'image Ivj est petite, alors k est proche de 0, et les niveaux de luminance de la première partie d'image Ivi qui a la surface la plus grande seront peu modifiés, alors que les niveaux de luminance de la seconde partie d'image Ivj qui a la surface la plus petite en proportion, seront les plus modifiés pour réaliser l'égalisation globale de luminance.

Donc lorsque, dans la machine appelée caméra virtuelle, l'utilisateur modifie les paramètres $\Theta$, $\Phi$ ou la focale, la constante k varie, une nouvelle loi F est calculée et ensuite de nouvelles lois Gi, Gj sont appliquées aux ensembles R et S.

Un dispositif mettant en oeuvre le calcul des fonctions Gi, Gj décrit plus haut est décrit ci-après.

## IV - Dispositif pour mettre en oeuvre les étapes du procédé d'égalisation de luminance

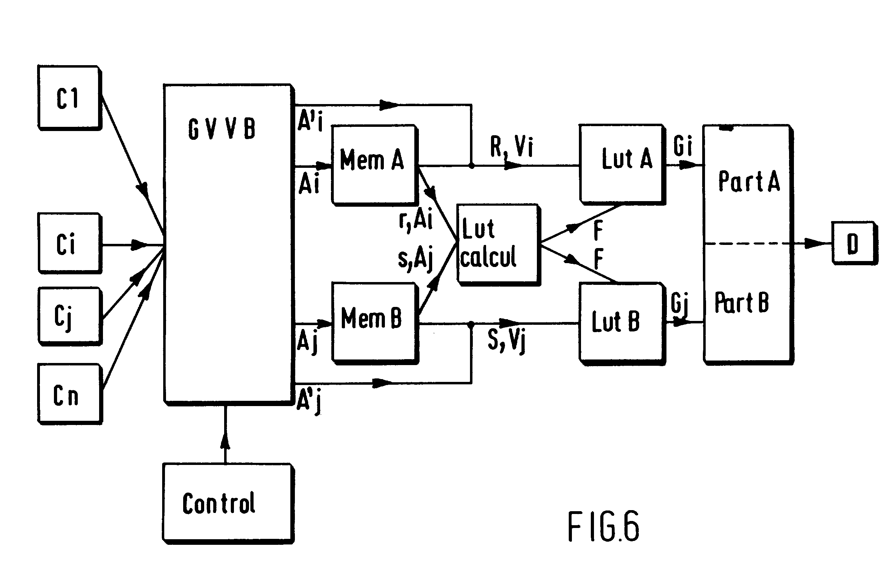

En référence avec la FIG.6 qui montre le dispositif de traitement de signal sous forme de blocs fonctionnels, ce dispositif comprend :

a) les n caméras C1,... Ci, Cj,... Cn de prise de vue fixes, disposées de manière à ce que leurs champs de vue individuels fusionnent pour former un seul champ de vue de grand angle, pour la prise de vue d'une scène panoramique. Leurs centres optiques P sont sensiblement confondus avec la précision décrite précédemment, et leurs distances focales sont fixes et connues.

b) Un système de contrôle (CONTROL) grâce auquel l'utilisateur peut afficher les angles de site et d'azimut et une distance focale de manière à ce que le système de contrôle associé à un système de construction d'image simule une caméra mobile dite virtuelle Cv.

c) Un système de construction d'image cible, GVVB (de l'anglais Geometrical Virtual View Builder). Ce système construit une image dite cible Iv, à partir des caractéristique des images sources I1,... Ii, Ij... In fournies par les caméras réelles, c'est-à-dire les coordonnées des pixels et leur luminance, en fonction des paramètres affichés par l'utilisateur sur le système de contrôle.

Le système de construction d'image fournit quatre groupes de données :

I) Les données relatives aux pixels de la partie restante A'i de la première partie d'image Ivi, c'est-à-dire les pixels non compris dans la partie sélectionnée Ai. Les pixels de A'i sont aussi caractérisés par leur localisation dans l'image cible Iv et par leur niveau de luminance dans l'ensemble R de Ivi.

II) Les données relatives aux pixels de la partie sélectionnée Ai de la première partie d'image Ivi : c'est-à-dire les coordonnées et les niveaux de luminance r de chaque pixel de Ai.

III) Les données relatives aux pixels de la partie sélectionnée Aj de la seconde partie d'image Ivj : c'est-à-dire les coordonnées et les niveaux de luminance s de chaque pixel de Aj.

IV) Les données relatives aux pixels de la partie restante A'j de la seconde partie d'image Ivj : c'est-à-dire les pixels non compris dans la partie sélectionnée Aj. Les pixels de A'j sont aussi caractérisés par leur localisation dans l'image cible Iv, et par leur niveau de luminance dans l'ensemble S de Ivj.

d) Deux mémoires MEM.A et MEM.B. La première mémoire MEM.A reçoit les données relatives aux pixels de la partie sélectionnée Ai, et la seconde mémoire MEM.B reçoit les données relatives aux pixels de la seconde partie sélectionnée Aj.

e) Le module LUT calcul : ce module calcule d'abord la loi F selon la relation $s = F(r)$ par la double récurrence décrite dans l'étape N°2 du procédé selon l'invention, à partir des données relatives aux pixels des parties sélectionnées Ai, Aj, qui sont disponibles dans MEM.A et MEM.B.

Ce module calcule ensuite les lois de correction Gi et Gj. Ce module applique la loi F telle que calculée précédemment sur les données relatives à la partie sélectionnée Ai disponibles dans MEM.A, et sur les données relatives à la partie complémentaire A'i disponibles en sortie I) de GVVB. Donc ce module calcule pour chaque niveau de luminance de l'ensemble R de Ivi, la loi $Gi(R) = kF(R) + (1-k)R$. Ce module applique aussi la loi F sur les données relatives à la partie sélectionnée Aj disponibles dans MEM.B, et sur les données relatives à la partie complémentaire A'j disponibles en sortie IV) de GVVB. Donc ce module calcule pour chaque niveau de luminance $F(R) = S$ de Ivj, la loi $Gj(R) = kR + (1-k) F^{-1}(R)$. On peut choisir k égal au rapport de la surface de la seconde partie d'image Ivj, sur la surface totale de l'image cible Iv.

f) Deux modules, respectivement LUT.A et LUT.B qui appliquent les lois Gi et Gj sur chaque pixel des première et seconde parties d'image cibles Ivi, Ivj en fonction de leurs niveaux de luminance dans les ensembles R et S, de manière à égaliser globalement les niveaux correspondants.

g) Deux modules PART.A et PART.B qui stockent les données résultant de LUT.A et LUT.B respectivement, pour constituer les première et seconde parties d'image Ivi et Ivj.

h) Un module D d'affichage ou d'enregistrement.

Le module LUT calcul n'est pas câblé ; c'est un microprocesseur qui réalise les calculs décrits plus haut. Les autres modules peuvent être des modules câblés par exemple des tables de codage (en anglais LOOK UP TABLE).

Le dispositif d'égalisation de luminance décrit dans cet exposé n'est pas limité à la correction des luminances dans les images formées par les caméras adjacentes. Il pourrait aussi être appliqué à la superposition d'images temporelles dans le cas d'une séquence d'images.

Dans une variante de la mise en oeuvre de l'invention, il peut se faire que les caméras C1... Cn utilisent des tables d'acquisition d'image qui contiennent déjà une table de codage chacune.

Cela signifie que dans chaque module de caméra C1... CN, il existe déjà un module LUT tel que LUT.1..., LUT.n. Dans ce cas, on peut économiser la présence des modules LUT.A et LUT.B du schéma de la FIG.6. Il faut que cela reporter le résultat des calculs du module LUT.calcul pour modifier les données contenues dans les tables LUT.i, LUT.j correspondant aux caméras Ci, Cj.

Ensuite les sorties des différentes tables des caméras LUT.1... LUT.i, LUT.j... LUT.n sont entrées dans un système de construction d'image GVVB.

Cela nécessite néanmoins de disposer de deux systèmes de construction d'image du type GVVB : un premier système qui fournit les données à MEM.A et MEM.B pour LUT.calcul et un second système qui maintenant construit l'image définitive corrigée.

D'autre part, il faut noter que les caméras réelles peuvent fournir des données analogiques. Dans ce cas, des modules de conversion analogique-numérique sont utilisés pour former les images sources numériques.

Cependant, pour construire l'image cible, selon l'invention, au plus deux ou trois images sources sont nécessaires, donc seulement respectivement deux ou trois convertisseurs.

Si le nombre des caméras réelles C1... Cn est plus grand que le nombre des images sources utilisées, un module de multiplexage peut être disposé entre les sorties analogiques des caméras et les entrées des convertisseurs pour sélectionner les caméras réelles actives en fonction des caractéristiques de la caméra mobile virtuelle, par exemple en fonction de l'angle d'azimut.

Ainsi, si le nombre des caméras réelles est six, et si le nombre des images sources nécessaires est au plus deux, on utilisera seulement deux convertisseurs analogique-numérique, et un multiplexeur pour sélectionner parmi les six, les deux caméras réelles actives Ci, Cj, pour fournir les deux images sources numériques Ii, Ij en sortie des convertisseurs correspondants.

La sortie des convertisseurs est ensuite appliquée à l'entrée du système de construction d'image GVVB.

## Revendications

1. Procédé de traitement d'images comprenant une étape de formation d'une image composite numérique appelée cible (Iv) au moyen d'au moins deux parties d'images (Ivi,Ivj) adjacentes construites à partir d'images adjacentes de cadrage fixe, appelées sources (Ii,Ij) fournies par un système de n caméras réelles fixes, arrangées de manière à ce que leurs champs de vue individuels fusionnent pour former un seul champ de vue de grand angle pour la prise de vue d'une scène panoramique, ce procédé étant **caractérisé en ce qu'**il comprend une étape d'égalisation des niveaux de luminance différents de pixels appelés correspondants, qui sont situés dans les parties d'images adjacentes (Ivi,Ivj) et qui auraient le même niveau de luminance s'ils étaient situés dans une même partie d'image, incluant des sous-étapes de :

> détermination de premier et second ensembles (S,R) de niveaux de luminances des pixels respectivement de première et seconde parties d'images adjacentes (Ivi,Ivj),
> détermination de premier et second sous-ensembles (s,r) de niveaux de luminance respectivement des premier et second sous-ensembles (Ai,Aj) de pixels correspondants (m'i,m'j) des première et seconde parties d'images (Ivi, Ivj),
> détermination d'une loi de correspondance (F) entre les niveaux de luminance des pixels correspondants (m'i,m'j) des premier et second sous-ensembles (s,r) de niveaux de luminance,
> détermination, en dépendance de ladite loi de correspondance (F), de première et seconde lois d'égalisation globale [Gi(R),Gj(S)] des niveaux de luminance des pixels correspondants des premier et second ensembles de niveaux de luminance (S,R),
> application des première et seconde lois d'égalisation globale de luminance [Gi(R),Gj(S)] respectivement dans les première et seconde parties d'images (Ivi,Ivj).

2. Procédé de traitement d'images selon la revendication 1, caractérisé en ce que, la sous-étape de détermination de la loi (F) de correspondance comprend :

> un calcul d'une fonction qui fait correspondre les niveaux de luminance des pixels du premier sous-ensemble (s) de niveaux de luminance avec les niveaux de luminance des pixels correspondants du second sous-ensemble (r) de niveaux de luminance par une relation d'un degré supérieur à 2, de la forme : $s = F(r)$.

3. Procédé de traitement d'images selon la revendication 2, caractérisé en ce que la sous-étape de détermination des premier et second sous-ensembles de luminance (r,s) comprend :

> une détermination de la position d'une droite (L) frontière localisée entre deux bords juxtaposés des deux parties d'images (Ivi,Ivj) construites à partir de deux images sources (Ii,Ij) adjacentes positionnées bord à bord,
> une sélection de pixels alignés sur des lignes ou des colonnes parallèles à la droite frontière, et symétriques par rapport à cette droite frontière, dans les première et seconde parties d'images (Ivi, Ivj) respectivement, pour former le premier et second sous-ensembles (Ai, Aj) de pixels,
> un classement des pixels des premier et second sous-ensembles (Ai, Aj) respectivement par couples de pixels qui sont dits correspondants s'ils ont pour coordonnées, la même coordonnée sur un axe parallèle à la droite frontière, et une coordonnée symétrique par rapport à celle de la droite frontière sur un axe perpendiculaire à cette droite frontière, dans un système d'axes dans l'image cible (Iv),
> la formation des premier et second sous-ensembles (s,r) de niveaux de luminance au moyen respectivement des premier et second pixels des couples (m'i,m'j) de pixels correspondants.

4. Procédé de traitement d'images selon la revendication 2, caractérisé en ce que la sous-étape de détermination des premier et second sous-ensembles de luminance (r,s) comprend :

> une détermination d'une bande de recouvrement (LiLj) de deux parties d'images adjacentes (Ivi,Ivj) l'une par l'autre, construites à partir de deux images sources (Ii,Ij) ayant une zone de recoupement,
> une sélection des pixels de la bande de recouvrement situés dans les première et seconde parties d'images adjacentes (Ivi,Ivj) respectivement, pour former les premier et second sous-ensembles (Ai,Aj) de pixels,

un classement des pixels des premier et second sous-ensembles (Ai,Aj) respectivement par couples de pixels qui sont dits correspondants s'ils ont les mêmes coordonnées dans un système d'axes dans l'image cible (Iv),

la formation des premier et second sous-ensembles (s,r) de niveaux de luminance au moyen respectivement des premier et second pixels des couples (m'i,m'j) de pixels correspondants.

5. Procédé de traitement d'images selon l'une des revendications 3 ou 4, caractérisé en ce que la sous-étape de détermination de la loi (F) de correspondance comprend une mise en oeuvre d'une méthode itérative appelée d'éclaircissement incluant :

un premier pas de calcul d'une première fonction (F) de correspondance ayant une première courbe représentative de la forme s = F(r) qui passe au mieux par les points d'un premier nuage de points (N1) constitués par les niveaux de luminance (r,s) des couples de pixels correspondants,

un second pas de calcul d'une seconde fonction de correspondance (F) ayant une seconde courbe représentative qui passe au mieux par les points d'un second nuage de points (N2) constitué par les niveaux de luminance (r,s) des couples de pixels correspondants pondérés en fonction de leur distance à la première courbe représentative, les poids les plus faibles étant attribués aux points les plus éloignés de la première courbe représentative,

et des pas ultérieurs de calcul de fonctions de correspondance (F) successives ayant des courbes représentatives qui passent au mieux par des nuages de points formés successivement en diminuant à chaque pas les poids des points les plus éloignés de la courbe représentative de la fonction de correspondance calculée au pas précédent jusqu'à ce qu'une courbe représentative d'une fonction s = F(r) passe substantiellement par des points restants affectés de poids supérieurs à une valeur prédéterminée,

la détermination de la fonction calculée au dernier pas comme loi de correspondance (F) utilisée dans le calcul des première et seconde lois d'égalisation globale (Gi,Gj).

6. Procédé de traitement d'images selon la revendication 5, caractérisé en ce que les poids attribués aux points des nuages situés au-delà de distances prédéterminées des courbes représentatives considérées à un pas, sont mis à zéro pour éliminer ces points au pas suivant de calcul.

7. Procédé selon l'une des revendications 5 ou 6, caractérisé en ce que la loi de correspondance est une fonction appelée gamma de la forme $F(r) = a + br^c$, où r représente les niveaux de luminance du premier sous-ensemble (r) de niveaux de luminance du premier sous-ensemble (Ai) de pixels (m'i), et où a, b et c sont des constantes,

et en ce qu'il comprend une étape de détermination des constantes a, b, c par itération.

8. Procédé de traitement d'image selon la revendication 7, caractérisé en ce qu'il comprend la détermination de la loi de correspondance (F) par une double itération, dans laquelle le premier pas de calcul comprend :

une première phase de détermination des paramètres a,b,c menée à bien au moyen d'une première étape où une première valeur du paramètre c de l'exposant est fixée et les paramètres a et b sont calculés pour un premier nuage (N1) de couples de points (r,s), et d'étapes ultérieures où des seconde, troisième..., etc. valeurs du paramètre c de l'exposant sont fixées et où les paramètres a et b sont calculés pour le même premier nuage (N1) de couples de points (r,s), à la suite de quoi des valeurs d'un groupe de paramètres a,b,c sont sélectionnées comme fournissant une première fonction de correspondance (F) telle que $F(r) = a + br^c$ passant au mieux par le premier nuage (N1) de points (r,s),

une seconde phase d'éclaircissement dans laquelle, dans une première étape les points du premier nuage (N1) les plus éloignés de la courbe représentative de la fonction (F) déterminée dans la première phase sont éliminés pour garder un second nuage éclairci (N2) de points, et double itération dans laquelle le second pas de calcul comprend :

une première phase de détermination des paramètres a,b,c menée à bien en utilisant la valeur du paramètre c déterminée au premier pas, et en sélectionnant les paramètres a,b pour que la fonction $F(r) = a + br^c$ passe au mieux par le second nuage éclairci (N2) de points (r,s),

et une deuxième phase menée à bien en poursuivant des essais en utilisant des valeurs du paramètre c autour de la valeur déterminée au premier pas jusqu'à ce que la fonction $F(r) = a + br^c$ passe au mieux par les points (r,s) restants dont la distance à la courbe représentative de cette fonction (F) est inférieure à une distance prédéterminée.

9. Procédé de traitement d'images selon l'une des revendications 1 à 8, caractérisé en ce qu'il comprend :

le calcul de la première loi (Gi) et la seconde loi (Gj) d'égalisation globale comme des fonctions linéaires de la loi de correspondance (F).

10. Procédé de traitement d'images selon la revendication 9, caractérisé en ce que la première loi d'égalisation globale est choisie de la forme $Gi(R) = kF(R) + (1-k)R$ et la seconde loi d'égalisation globale est choisie de la forme
$Gj[S] = kS + (1-k) F^{-1}(S)$, où F est la loi de correspondance, où k est une constante qui prend en compte la proportion en surface de l'une des parties d'image (Ivi,Ivj) dans l'image cible totale (Iv), et où R et S sont des niveaux de luminances correspondants du premier et second ensembles (R,S) de niveaux de luminance.

11. Système de traitement d'images comprenant :

un système de numérisation des images,
un système de n caméras réelles fixes (C1,..Ci, Cj,..Cn), arrangées de manière à ce que leurs champs de vue individuels fusionnent pour former un seul champ de vue de grand angle pour la prise de vue d'une scène panoramique, fournissant une série d'images adjacentes appelées sources (I1,..Ii,Ij,..In),
un système de construction d'image (GVVB) simulant une caméra appelée virtuelle (Cv) balayant continuement la scène panoramique pour fournir une sous-image appelée cible (Iv) formée d'au moins deux parties d'image (Ivi,Ivj) adjacentes, correspondant à une section sélectionnée du champ de vue de grand angle, et construite à partir d'images sources (Ii,Ij) adjacentes,

**caractérisé en ce que** ce système de traitement comprend en outre des moyens pour mettre en oeuvre un procédé selon la revendication 1, ces moyens incluant un système d'égalisation de luminance pour égaliser globalement des niveaux de luminance différents de pixels appelés correspondants, qui sont situés dans des parties d'images adjacentes (Ivi,Ivj) et qui auraient le même niveau de luminance s'ils étaient situés dans une même partie d'image, incluant :

des modules de mémoire (MEM.A,MEM.B) pour fournir des premier et second ensembles (S,R) de niveaux de luminances des pixels respectivement de première et seconde parties d'images adjacentes (Ivi,Ivj), et pour fournir des premier et second sous-ensembles (s,r) de niveaux de luminance respectivement de premier et second sous-ensembles (Ai,Aj) de pixels correspondants (m'i,m'j) des première et seconde parties d'images (Ivi,Ivj),
un module de calcul (LUT.CALCUL) d'une loi de correspondance (F) entre les niveaux de luminance des pixels correspondants (m'i,m'j) des premier et second sous-ensembles (s,r) de niveaux de luminance,
un premier et un second modules de tabulation (LUT.A,LUT.B) pour appliquer des première et seconde lois d'égalisation globale [Gi(R),Gj(S)] respectivement dans les première et seconde parties d'images (Ivi,Ivj) sur des niveaux de luminance des pixels correspondants des premier et second ensembles de niveaux de luminance (S,R), lesdites lois étant calculées en dépendance de ladite loi de correspondance (F).

12. Système selon la revendication 11, caractérisé en ce qu'il comprend en outre, pour construire l'image cible (Iv) dans le système de construction (GVVB) :
un module de contrôle (CONTROL) qui règle la caméra virtuelle mobile (Cv) par 3 paramètres :

1) la variation d'orientation (PAN) panoramique, dite variation d'azimut, de son axe optique, correspondant à une variation d'orientation parallèlement à un plan horizontal de cet axe optique passant par un centre optique fixe commun à la fois à toutes les caméras réelles fixes et à la caméra virtuelle mobile ;
2) la variation d'orientation (TILT), dite de site, de son axe optique, toujours passant par le centre optique fixe, dans un plan vertical ;
3) la variation de la distance focale de la caméra virtuelle qui permet de fournir une image cible plus ou moins agrandie,

et un module de multiplexage pour sélectionner parmi toutes les caméras réelles (C1,...Cn) les deux caméras (Ci,Cj) correspondant aux images sources (Ii,Ij) nécessaires pour fournir les données des parties d'image cibles (Ivi,Ivj) entrant dans la construction de l'image cible (Iv).

13. Système selon l'une des revendications 11 ou 12, caractérisé en ce qu'il comprend en outre des modules (PART.A, PART.B) de stockage des données traitées des première et seconde parties d'image cibles (Ivi, Ivj) et un module (D) d'affichage ou d'enregistrement.

**Patentansprüche**

1. Bildverarbeitungsverfahren mit einem Schritt zur Erstellung eines sogenannten digitalen Zielbildes (Iv) mit Hilfe von wenigstens zwei aneinandergrenzenden Bildteilen (Ivi, Ivj), die aus aneinandergrenzenden, sogenannten Quellbildern (Ii, Ij) mit fester Ausrichtung gebildet werden, die von einem System von n realen Festkameras geliefert werden, die so angeordnet sind, daß ihre jeweiligen Sehfelder sich so zusammenfügen, daß sie ein einziges weitwinkliges Sehfeld zur Aufnahme einer Panoramaszene bilden, dadurch gekennzeichnet, daß es einen Schritt zum Ausgleich der verschiedenen Helligkeitsstufen von sogenannten entsprechenden Pixeln umfaßt, die sich in den aneinandergrenzenden Bildteilen (Ivi,Ivj) befinden und die die gleiche Helligkeitsstufe hätten, wenn sie sich im gleichen Bildteil befänden, und das die folgenden Teilschritte beinhaltet:

Bestimmung einer ersten und einer zweiten Menge (S,R) von Graustufen der Pixel eines ersten bzw. zweiten aneinandergrenzenden Bildteils (Ivi,Ivj),

Bestimmung einer ersten und einer zweiten Teilmenge (s,r) von Helligkeitsstufen der ersten bzw. zweiten Teilmenge (Ai, Aj) von entsprechenden Pixeln (m'i,m'j) des ersten und zweiten Bildteils (Ivi,Ivj),

Bestimmung eines Entsprechungsgesetzes (F) zwischen den Helligkeitsstufen der entsprechenden Pixel (m'i,m'j) der ersten und der zweiten Teilmenge (s,r) von Helligkeitsstufen,

Bestimmung in Abhängigkeit von dem genannten Gesetz (F) eines ersten und eines zweiten Gesamtausgleichsgesetzes [Gi(R),Gj(S)] für die Helligkeitsstufen der entsprechenden Pixel der ersten und der zweite Menge von Helligkeitsstufen (S,R),

Anwendung des ersten und des zweiten Gesamthelligkeits-Ausgleichsgesetz [Gi(R),Gj(S)] im ersten bzw. im zweiten Bildteil (Ivi, Ivj).

2. Bildverarbeitungsverfahren nach Anspruch 1, dadurch gekennzeichnet, daß der Teilschritt zur Bestimmung des Entsprechungsgesetzes (F) folgendes umfaßt:

eine Berechnung einer Funktion, die die Helligkeitsstufen der Pixel der ersten Teilmenge (s) von Helligkeitsstufen den Helligkeitsstufen der entsprechenden Pixel der zweiten Teilmenge (r) von Helligkeitsstufen durch eine Beziehung mit höherem Grad als 2 der Form s = F(r) entsprechen läßt.

3. Bildverarbeitungsverfahren nach Anspruch 2, dadurch gekennzeichnet, daß der Teilschritt zur Bestimmung der ersten und der zweiten Helligkeits-Teilmenge (r,s) folgendes umfaßt:

eine Bestimmung der Position einer Grenzgeraden (L), die sich zwischen zwei nebeneinanderliegenden Rändern der zwei Bildteile (Ivi,Ivj) befindet, die aus den zwei angrenzenden und Rand an Rand positionierten Quellbildern (Ii, Ij) erzeugt werden,

eine Selektion von Pixeln, die in dem ersten bzw. zweiten Bildteil (Ivi, Ivj) entlang der Zeilen oder Spalten parallel zur Grenzgeraden ausgerichtet und symmetrisch bezüglich dieser Grenzgeraden sind, um die ersten und die zweite Teilmenge (Ai, Aj) von Pixeln zu bilden,

eine Gruppierung der Pixel der ersten bzw. der zweiten (Ai, Aj) in Paare von Pixeln, die als entsprechend bezeichnet werden, wenn sie als Koordinaten die gleiche Koordinate auf einer Achse parallel zur Grenzgeraden und eine bezüglich der Grenzgeraden symmetrische Koordinate auf einer zu dieser Grenzgeraden senkrechten Achse in einem Achsensystem des Zielbildes (iv) haben,

Bildung einer ersten und einer zweiten Teilmenge (s,r) von Helligkeitsstufen mittels der ersten und zweiten Pixel der Paare (m'i,m'j) von entsprechenden Pixeln.

4. Bildverarbeitungsverfahren nach Anspruch 2, dadurch gekennzeichnet, daß der Teilschritt zur Bestimmung der ersten und der zweiten Helligkeits-Teilmenge (r,s) folgendes umfaßt:

eine Bestimmung eines Bereichs (LiLj) mit gegenseitiger Überlappung zweier aneinandergrenzender Bildteile (Ivi,Ivj), die aus zwei Quellbildern (Ii, Ij) mit einer Überschneidungszone erzeugt werden,

eine Selektion von Pixeln des Überlappungsbereich, die sich in dem ersten bzw. dem zweiten Teil aneinandergrenzender Bilder (Ivi,Ivj) befinden, um die erste und die zweite Teilmenge (Ai,Aj) von Pixeln zu bilden,

eine Gruppierung der Pixel der ersten bzw. der zweiten Teilmenge (Ai,Aj) in Paare von Pixeln, die als entsprechend bezeichnet werden, wenn sie die gleichen Koordinaten in einem Achsensystem im Zielbild (Iv) haben,

Bildung einer ersten und einer zweiten Teilmenge (s,r) von Helligkeitsstufen mittels der ersten bzw. der zweiten Pixel der Paare (m'j,m'j) von entsprechenden Pixeln.

5. Bildverarbeitungsverfahren nach einem der Ansprüche 3 oder 4, dadurch gekennzeichnet, daß der Teilschritt zur Bestimmung des Entsprechungsgesetzes (F) die Ausführung eines sogenannten iterativen Aufhellungsverfahren umfaßt, das folgendes beinhaltet:

einen ersten Schritt zur Berechnung einer ersten Entsprechungsfunktion (F) mit einer ersten repräsentativen Kurve der Form s = F(r), die am besten die Punkte einer ersten Wolke von Punkten (N1) durchläuft, die durch die Helligkeitsstufen (r,s) der Paare von entsprechenden Pixeln gebildet werden,

einen zweiten Schritt zur Berechnung einer zweiten Entsprechungsfunktion (F) mit einer zweiten repräsentativen Kurve, die am besten die Punkte einer zweiten Wolke von Punkten (N2) durchläuft, die durch die Helligkeitsstufen (r,s) der Paare von Pixeln gebildet wird, die in Abhängigkeit von ihrem Abstand zur ersten repräsentativen Kurve gewichtet sind, wobei die geringsten Gewichte den am weitesten von der ersten repräsentativen Kurve entfernten Punkte zugeordnet werden,

und spätere Schritte zur Berechnung von nachfolgenden Entsprechungsfunktionen (F) mit repräsentativen Kurven, die am besten die Wolken von Punkten durchlaufen, die nacheinander gebildet werden, indem bei jedem Schritt das Gewicht der Punkte verringert wird, die am weitesten von der beim vorherigen Schritt berechneten repräsentativen Kurve entfernt sind, bis eine repräsentative Kurve s = F(r) im wesentlichen durch die restlichen Punkte verläuft, denen zuvor bestimmte höhere Gewicht zugeordnet sind,

die Bestimmung der im letzten Schritt berechneten Funktion als Entsprechungsgesetz (F), das bei der Berechnung des ersten und des zweiten Gesamtausgleichsgesetzes (Gi,Gj) verwendet wird.

**6.** Bildverarbeitungsverfahren nach Anspruch 5, <u>dadurch gekennzeichnet,</u> daß die Gewichte, die den Punkten der Wolken jenseits von zuvor bestimmten Abständen zu den bei einem Schritt betrachteten Kurven zugewiesen wurden, auf null gesetzt werden, um diese Punkte beim folgenden Rechenschritt zu eliminieren.

**7.** Verfahren nach einem der Ansprüche 5 oder 6, <u>dadurch gekennzeichnet,</u> daß das Entsprechungsgesetz eine sogenannte Gamma-Funktion der Form F $(r) = a + br^c$ ist, wobei r die Helligkeitsstufen der ersten Teilmenge (r) von Helligkeitsstufen der ersten Teilmenge (Ai) von Pixeln (m'i) repräsentiert und a, b und c Konstanten sind, und daß es einen Schritt zur Bestimmung der Konstanten a, b und c durch Iteration umfaßt.

**8.** Bildverarbeitungsverfahren nach Anspruch 7, <u>dadurch gekennzeichnet,</u> daß es die Bestimmung des Entsprechungsgesetzes (F) durch eine doppelte Iteration umfaßt, bei der der erste Rechenschritt folgendes umfaßt:

eine erste Phase zur Bestimmung der Parameter a,b,c, die mittels eines ersten Schrittes erfolgt, bei dem ein erster Wert des Parameters c des Exponenten festgelegt wird und die Parameter a und b für eine erste Wolke (N1) von Paaren von Punkten (r,s) berechnet werden, und spätere Schritte, in denen zweite, dritte... usw. Werte des Parameters c des Exponenten festgelegt werden und die Parameter a und b für die gleiche Wolke (N1) von Paaren von Punkten (r,s) berechnet werden, und im Anschluß daran Werte einer Gruppe von Parametern a,b,c als diejenigen ausgewählt werden, die eine erste Entsprechungsfunktion (F) liefern, so daß $F(r) = a + br^c$ am besten durch die erste Wolke (N1) von Punkten (r,s) verläuft,

eine zweite Aufhellungsphase, bei der in einem ersten Schritt die Punkte der ersten Wolke (N1) eliminiert werden, die am weitesten von der die Funktion (F) repräsentierenden und in der ersten Phase bestimmten Kurve entfernt sind, um eine zweite, aufgehellte Wolke (N2) von Punkten zurückzubehalten, und eine doppelte Iteration, bei der der zweite Rechenschritt folgendes umfaßt:

eine erste Phase zur Bestimmung der Parameter a,b,c, die durchgeführt wird, indem der im ersten Schritt berechnete Wert des Parameters c verwendet wird und die Parameter a,b so ausgewählt werden, daß die Funktion $F(r) = a + br^c$ am besten durch die zweite aufgehellte Wolke (N2) von Punkten (r,s) verläuft,

und eine zweite Phase, die durchgeführt wird, indem man die Versuche unter Verwendung von Werten für den Parameter c, die um den bei dem ersten Schritt bestimmten Wert herumliegen, fortsetzt, bis die Funktion $F(r) = a + b^c$ am besten durch die restlichen Punkte (r,s) verläuft, deren Abstand zu der diese Funktion (F) repräsentierenden Kurve unter einem zuvor bestimmten Abstand liegt.

**9.** Bildverarbeitungsverfahren nach einem der Ansprüche 1 bis 8, <u>dadurch gekennzeichnet,</u> daß es folgendes umfaßt:

die Berechnung des ersten Gesamtausgleichsgesetzes (Gi) und des zweiten Gesamtausgleichsgesetzes (Gj) als lineare Funktionen des Entsprechungsgesetzes (F).

**10.** Bildverarbeitungsverfahren nach Anspruch 9, <u>dadurch gekennzeichnet,</u> daß das erste Gesamtausgleichsgesetz in der Form Gi(R) = kF(R) + (1-k)R und das zweite Gesamtausgleichsgesetz in der Form Gj(S) = kS + (1-k) $F^{-1}$(S) gewählt wird, wobei F das Entsprechungsgesetz ist, k eine Konstante, die den flächenmäßigen Anteil einer der beiden Bildteile (Ivi,Ivj) im gesamten Zielbild (Iv) berücksichtigt, und R und S entsprechende Helligkeitsstufen der ersten und der zweiten Menge (R,S) von Helligkeitsstufen sind.

11. Bildverarbeitungssystem mit:

einem System zur Digitalisierung von Bildern, einem eine Reihe von aneinandergrenzenden sogenannten Quellbildern (I1,..Ii,Ij..In) lieferndes System aus n realen Festkameras (C1,..Ci, Cj,..Cn), die so angeordnet sind, daß ihre jeweiligen Sehfelder sich so zusammensetzen, daß sie ein einziges weitwinkliges Sehfeld zur Aufnahme einer Panoramaszene bilden, einem Bilderzeugungssystem (GVVB), das eine sogenannte virtuelle Kamera (Cv) simuliert, die die Panoramszene kontinuierlich abtastet, um ein sogenanntes Zielteilbild (Iv) zu liefern, das aus wenigstens zwei aneinandergrenzenden Bildteilen (Ivi, Ivj) gebildet wird, einem ausgewählten Abschnitt des weitwinkligen Sehfeldes entspricht und aus den aneinandergrenzenden Quellbildern (Ii, Ij) erzeugt wird, <u>dadurch gekennzeichnet,</u> daß dieses Verarbeitungssystem außerdem Mittel zur Ausführung des in Anspruch 1 beschriebenen Verfahrens umfaßt, wobei diese Mittel ein System zum Helligkeitsausgleich beinhalten, um global die verschiedenen, Helligkeitsstufen von sogenannten entsprechenden Pixeln auszugleichen, die sich in aneinandergrenzenden Bildteilen (Ivi, Ivj) befinden und die die gleiche Helligkeitsstufe hätten, wenn sie sich im gleichen Bildteil befinden würden, mit:
Speichermodulen (MEM.A,MEM.B), um eine erste und eine zweite Menge (S,R) von Helligkeitsstufen der Pixel eines ersten bzw. zweiten aneinandergrenzenden Bildteils (Ivi, Ivj) sowie eine erste und eine zweite Teilmenge (s,r) von Helligkeitsstufen einer ersten bzw. zweiten Teilmenge (Ai, Aj) von entsprechenden Pixeln (m'i, m'j) des ersten und des zweiten Bildteils (Ivi, Ivj) zu liefern, einem Berechnungsmodul (LUT.CALCUL) für ein Entsprechungsgesetz (F) zwischen den Helligkeitsstufen entsprechender Pixel (m'i,m'j) der ersten und der zweiten Teilmenge (s,r) von Helligkeitsstufen, einem ersten und einem zweiten Tabellenmodul (LUT.A,LUT.B), um ein erstes und ein zweites Gesamtausgleichsgesetz [Gi(R),Gj(S)] im ersten bzw. im zweiten Bildteil (Ivi,Ivj) auf Helligkeitsstufen der entsprechenden Pixel der ersten und zweiten Menge von Helligkeitsstufen (S,R) anzuwenden, wobei diese Gesetze abhängig von dem genannten Entsprechungsgesetz (F) berechnet werden.

12. System nach Anspruch 11, <u>dadurch gekennzeich-</u>

<u>net,</u> daß es außerdem zur Erzeugung des Zielbildes (Iv) im Erzeugungssystem (GVVB) folgendes umfaßt:

ein Steuermodul (CONTROL), das die virtuelle mobile Kamera (Cv) mittels dreier Parameter regelt:

1) die als Azimutveränderung bezeichnete Panorama-Ausrichtungsveränderung (PAN) ihrer optischen Achse, die einer Ausrichtungsveränderung, parallel zu einer horizontalen Ebene, dieser optischen Achse entspricht, die durch einen festen optischen Mittelpunkt verläuft, den gleichzeitig alle realen Festkameras und die virtuelle mobile Kamera gemeinsam haben,
2) die als Elevationsveränderung bezeichnete Ausrichtungsveränderung (TILT) ihrer immer durch den festen optischen Mittelpunkt verlaufenden optischen Achse in einer vertikalen Ebene,
3) die Veränderung des Fokussierungsabstandes der virtuellen Kamera, die es ermöglicht, ein mehr oder weniger vergrößertes Bild zu liefern,

und ein Multiplexmodul, um von allen realen Kameras (C1,...Cn) die zwei Kameras (Ci, Cj) auszuwählen, die den Quellbildern (Ii, Ij) entsprechen, die zur Lieferung der Daten der in die Erzeugung des Zielbildes (Iv) eingehenden Zielteilbilder (Ivi,Ivj) erforderlich sind.

13. System nach einem der Ansprüche 11 oder 12, <u>dadurch gekennzeichnet,</u> daß es außerdem Module (PART.A, PART.B) zur Speicherung der verarbeiteten Daten des ersten und des zweiten Zielteilbildes (Ivi, Ivj) und ein Modul (D) zur Anzeige oder Aufzeichnung umfaßt.

**Claims**

1. An image processing method, including a step for forming a digital composite image, referred to as a target image (Iv), by means of at least two adjacent image portions (Ivi, Ivj), formed from adjacent, fixed-field images which are referred to as source images (Ii, Ij) and are supplied by a system of n fixed, real cameras which are arranged in such a manner that their individual fields of view merge so as to form a single wide-angle field of view for recording a panoramic scene, which method is characterized in that it includes a step for equalizing the different luminance levels of pixels which are referred to as corresponding pixels, are situated in the adjacent image portions (Ivi, Ivj) and would have the same luminance level if they were situated in the same image portion, which step includes the sub-steps of:

determining first and second sets (S, R) of luminance levels of the pixels of the first and second adjacent image portions (Ivi, Ivj),

determining first and second sub-sets (s, r) of luminance levels of the first and second sub-sets (Ai, Aj) of corresponding pixels (m'i, m'j) of the first and second image portions (Ivi, Ivj), respectively,

determining a rule (F) of correspondence between the luminance levels of the corresponding pixels (m'i, m'j) of the first and second sub-sets (s, r) of luminance levels,

determining, in dependence on said correspondence rule (F), first and second overall equalization rules [Gi(R), Gj(S)] for the luminance levels of the corresponding pixels of the first and second sets of luminance levels (S, R), applying first and second overall luminance equalization rules [Gi(R), Gj(S)] to the first and second image portions (Ivi, Ivj), respectively.

2. An image processing method as claimed in Claim 1, characterized in that the sub-step for determining the correspondence rule (F) includes:

computing a function which makes the luminance levels of the pixels of the first sub-set(s) of luminance levels correspond to the luminance levels of the corresponding pixels of the second sub-set (r) of luminance levels by means of a relation which has an order higher than 2 and is formed as : s = F(r).

3. An image processing method as claimed in Claim 2, characterized in that the sub-step for determining the first and second luminance sub-sets (r, s) include:

determining the position of a boundary line (L) which is located between two juxtaposed edges of the two image portions (Ivi, Ivj) formed from two adjacent source images (Ii, Ij) positioned edge-to-edge,

selecting pixels, arranged in rows or columns parallel to the boundary line and symmetrically with respect thereto, in the first and second image portions (Ivi, Ivj), respectively, in order to form the first and second sub-sets (Ai, Aj) of pixels,

classifying the pixels of the first and second sub-sets (ai, Aj) in pairs of pixels which are said to be corresponding if they have as their coordinates the same coordinate on an axis parallel to the boundary line and a coordinate which is symmetrical with respect to that of the boundary line on an axis perpendicular to said boundary line in a system of axes in the target image (Iv),

forming the first and second sub-sets (s, r) of luminance levels by means of the first and second pixels of the corresponding pairs (m'i, m'j) of pixels.

4. An image processing method as claimed in Claim 2, characterized in that the sub-step for determining the first and second sub-sets of luminance (r, s) includes:

determining an overlapping band (LiLj) of two adjacent image portions (Ivi, Ivj) formed from two source images (Ii, Ij) with a zone of intersection,

selecting the pixels of the overlapping band which are situated in the first and second adjacent image portions (Ivi, Ivj) in order to form the first and second sub-sets (Ai, Aj) of pixels,

classifying the pixels of the first and second sub-sets (Ai, Aj) into pairs of pixels which are said to be corresponding if they have the same coordinates in a system of axes in the target image (Iv),

forming the first and second sub-sets (s, r) of luminance levels by means of the first and second pixels, respectively, of the pairs (m'i, m'j) of corresponding pixels.

5. An image processing method as claimed in one of the Claims 3 or 4, characterized in that the sub-step for determining the correspondence rule (F) includes the execution of an iterative method which is referred to as a thinning-out method and includes:

a first step for computing a first correspondence function (F) with a first representative curve of the form s = F(r) which passes best through the points of a first cluster of points (N1) formed by the luminance level s(r, s) of the corresponding pixel pairs,

a second step for computing a second correspondence function (F) with a second representative curve which passes best through the points of a second cluster of points (N2) formed by the luminance levels (r, s) of the corresponding pixel pairs, weighted as a function of their distance from the first representative curve, the lowest weights being assigned to the points situated furthest from the first representative curve,

and further steps for computing successive correspondence functions (F) with representative curves which pass best through the clusters of points successively formed while reducing, upon each step, the weights of the points situated furthest from the representative curve of the correspondence function computed during the preceding step, until a representative curve of a function $s = F(r)$ passes substantially through the remaining points with assigned weights exceeding a predetermined value,

determining the function computed during the last step as the correspondence rule (F) used to compute the first and second overall equalization rules (Gi, Gj).

6. An image processing method as claimed in Claim 5, characterized in that the weights assigned to the points of the clusters situated further than predetermined distances from the representative curves considered during a step are set to zero so as to exclude these points from the next computing step.

7. A method as claimed in one of the Claims 5 or 6, characterized in that the correspondence rule is a so-called gamma function of the form $F(r) = a + br^c$, where r represents the luminance levels of the first sub-set (r) of luminance levels of the first sub-set (Ai) of pixels (m'i), and where a, b and c are constants,

and in that it includes a step for determining the constants a, b and c by iteration.

8. An image processing method as claimed in Claim 7, characterized in that it includes the determination of the correspondence rule F by a double iteration, in which the first computing step includes:

a first phase for determining the parameters a, b, c which is carried out by means of a first stage in which a first value of the parameter c of the exponent is fixed and the parameters a and b are computed for a first cluster (N1) of pairs of points (r, s), and later stages in which second, third, ... etc. values of the parameter c of the exponent are fixed and in which the parameters a and b are computed for the same first cluster (N1) of pairs of points (r, s), after which the values of a group of parameters a, b, c are selected as yielding a first correspondence function (F) such that $F(r) = a + br^c$ passes best through the first cluster (N1) of points (r,s),

a second phase for thinning out in which, during a first step, the points of the first cluster (N1) which are situated furthest from the representative curve of the function (F) determined during the first phase are eliminated in order to preserve a second, thinned-out cluster (N2) of points, and double iteration in which the second computing step includes:

a first phase for determining the parameters a, b, c which is carried out while using the value of the parameter c determined during the first step and while selecting the parameters a, b in such a manner that the function $F(r) = a + br^c$ passes best through the second, thinned-out cluster (N2) of points (r,s),

and a second phase which is carried out by continuing attempts while using the value of the parameter c around the value determined during the first step until the function $F(r) = a + br^c$ passes best through the remaining points (r, s) whose distance from the representative curve of this function (F) is less than a predetermined distance.

9. An image processing method as claimed in one of the Claims 1 to 8, characterized in that it includes:

the computing of the first (Gi) and the second (Gj) overall equalization rule as linear functions of the correspondence rule (F).

10. An image processing method as claimed in Claim 9, characterized in that the first overall equalization rule is chosen to be of the form $Gi(R) = kF(R) + (1-k)R$ and the second overall equalization rule is chosen to be of the form $Gj[S] = kS + (1-k)F^{-1}(S)$, where F is the correspondence rule, k is a constant which takes into account the proportion of the surface area of one of the image portions (Ivi, Ivj) in the overall target image (Iv), and R and S are corresponding luminance levels of the first and second sets (R,S) of luminance levels.

11. An image processing system, including:

a system for the digitization of images,
a system of n fixed real cameras (C1,...Ci,...Cj,...Cn) which are arranged in such a manner that their individual fields of view merge so as to form a single wide-angle field of view for recording a panoramic scene, which cameras supply a series of adjacent images which are referred to as source images (I1,...Ii, Ij...In),
an image construction system (GVVB) which simulates a camera, referred to as a virtual camera (Cv), which continuously scans the panoramic scene so as to supply a sub-image which is referred to as a target image (IV) and is formed by at least two adjacent image portions (Ivi, Ivj), corresponding to a selected section of the wide-angle field of view, and constructed from adjacent source images (Ii, Ij),

characterized in that this processing system also includes means for carrying out a method as claimed in Claim 1, said means including a luminance equalization system for equalizing overall the different luminance levels of so-called corresponding pixels which are situated in the adjacent image portions (Ivi, Ivj) and would have the same luminance level if they were situated in the same image portion, including:

memory modules (MEM.A, MEM.B) for supplying the first and second sets (S,R) of luminance levels of the pixels of the first and second portions (Ivi, Ivj) of adjacent images, respectively, and for supplying the first and second sub-sets (s, r) of luminance levels of the first and second sub-sets (Ai, Aj), respectively, of the corresponding pixels (m'i, m'j) of the first and second image portions (Ivi, Ivj),

a module (LUT.CALCUL) for computing a rule (F) of correspondence between the luminance levels of the corresponding pixels (m'i, m'j) of the first and second sub-sets (s, r) of luminance levels,

a first and a second table module (LUT.A, LUT.B) for applying the first and second overall equalization rules [Gi(R), Gj(S)] in the first and second image portions (Ivi, Ivj) to the luminance levels of the corresponding pixels of the first and second sets of luminance levels (S, R), said rules being computed in dependence on said correspondence rule (F).

12. A system as claimed in Claim 11, characterized in that for the construction of the target image (Iv) in the construction system (GVVB) it also includes:

a control module (CONTROL) which controls the mobile virtual camera (Cv) by way of 3 parameters:

1) the variation of the panoramic orientation (PAN), referred to as variation of azimuth, of its optical axis, corresponding to a variation of the orientation parallel to a horizontal plane of this optical axis which passes through a fixed optical center which is common to all fixed real cameras and to the mobile virtual camera;

2) the variation of the orientation(TILT), referred to as variation of lie, of its optical axis, still passing through the fixed optical center, in a vertical plane;

3) the variation of the focal distance of the virtual camera, enabling the supply of a more or less enlarged target image,

and a multiplexing module for selecting, from among all real cameras (C1,...Cn), the two cameras (Ci, Cj) which correspond to the source images (Ii, Ij) required to supply the data of the target image portions (Ivi, Ivj) used in the construction of the target image (Iv).

13. A system as claimed in one of the Claims 11 and 12, characterized in that it also includes modules (PART.A, PART.B) for storing processed data of the first and second target image portions (Ivi, Ivj) and a module (D) for display or recording.

FIG.1B

FIG.1A

FIG.1C

FIG.1D

FIG.2A

FIG.2B

FIG.2C

FIG.3A

FIG.3B

FIG.4A

FIG.4B

FIG.5

FIG.6